(19) Europäisches Patentamt European Patent Office Office européen des brevets

(11) **EP 4 377 176 B1**

(12) **EUROPÄISCHE PATENTSCHRIFT**

(45) Veröffentlichungstag und Bekanntmachung des Hinweises auf die Patenterteilung:
**09.10.2024  Patentblatt 2024/41**

(21) Anmeldenummer: **23790294.5**

(22) Anmeldetag: **13.10.2023**

(51) Internationale Patentklassifikation (IPC):
**B60W 10/02** (2006.01)     **B60W 10/04** (2006.01)
**B60W 10/18** (2012.01)     **B60W 30/18** (2012.01)
**B60W 40/10** (2012.01)     **B60W 50/00** (2006.01)

(52) Gemeinsame Patentklassifikation (CPC):
**B60W 10/02; B60W 10/04; B60W 10/18;**
**B60W 30/18072; B60W 30/18127;**
**B60W 30/18136; B60W 40/1005; B60W 50/0097;**
B60W 2030/18081; B60W 2030/1809;
B60W 2050/002; B60W 2552/15; B60W 2555/60;
B60W 2720/103

(86) Internationale Anmeldenummer:
**PCT/EP2023/078571**

(87) Internationale Veröffentlichungsnummer:
**WO 2024/083695 (25.04.2024 Gazette 2024/17)**

(54) **VERFAHREN, DATENVERARBEITUNGSVORRICHTUNG UND SOFTWARE ZUM BESTIMMEN EINER VERZÖGERUNGSSTRATEGIE FÜR EIN FAHRZEUG**

METHOD, DATA PROCESSING DEVICE AND SOFTWARE FOR DETERMINING A DECELERATION STRATEGY FOR A VEHICLE

PROCÉDÉ, DISPOSITIF DE TRAITEMENT DE DONNÉES ET LOGICIEL POUR DÉTERMINER UNE STRATÉGIE DE DÉCÉLÉRATION POUR UN VÉHICULE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **18.10.2022  DE 102022127343**

(43) Veröffentlichungstag der Anmeldung:
**05.06.2024  Patentblatt 2024/23**

(73) Patentinhaber: **Bayerische Motoren Werke Aktiengesellschaft**
**80809 München (DE)**

(72) Erfinder:
• **Alvarez Prado, Andres David**
**81825 München (DE)**
• **Nenchev, Vladislav**
**80687 München (DE)**
• **Rathgeber, Christian**
**81245 München (DE)**

(56) Entgegenhaltungen:
**EP-A2- 2 591 968     DE-A1- 102018 131 280**

• **STROE NICOLETA ET AL: "Predictive Control Framework for HEV: Energy Management and Free-Wheeling Analysis", IEEE TRANSACTIONS ON INTELLIGENT VEHICLES, IEEE, vol. 4, no. 2, 1 June 2019 (2019-06-01), pages 220 - 231, XP011727139, ISSN: 2379-8858, [retrieved on 20190523], DOI: 10.1109/TIV.2019.2904416**

## Beschreibung

Die Erfindung betrifft Verfahren sowie eine Datenverarbeitungsvorrichtung zum Bestimmen einer Verzögerungsstrategie für ein Fahrzeug. Des Weiteren betrifft die Erfindung eine Software zum Ausführen solcher Verfahren mittels einer Datenverarbeitungsvorrichtung und ein computerlesbares Speichermedium, in dem eine solche Software gespeichert ist.

Moderne automatisierte Fahrfunktionen greifen aktiv in die Quer- und Längsführung des Fahrzeugs ein. Dafür wird häufig eine Trajektorienplanung, die die Bewegung des Fahrzeugs über mehrere Sekunden vorausschauend plant, eingesetzt. Der Fokus bei der Umsetzung der Trajektorienplanung liegt dabei üblicherweise auf Komfort und auf Sicherheit.

Aus dem Stand der Technik sind auch Bestrebungen bekannt, eine energieeffiziente Trajektorienplanung für automatisiertes Fahren umzusetzen, vgl. z.B.: Terwen, Stephan: Vorausschauende Längsregelung schwerer Lastkraftwagen. Karlsruher Institut für Technologie, PhD, 2010; Radke, Tobias: Energieoptimale Längsführung von Kraftfahrzeugen durch Einsatz vorausschauender Fahrstrategien. Karlsruher Institut für Technologie, PhD, 2013; Yan et al: Eco-Coasting Strategies Using Road Grade Preview: Evaluation and Online Implementation Based on Mixed Integer Model Predictive Control, arXiv, 2015; A Sciarretta, Giovanni de Nunzio, L Leon Ojeda. Optimal Ecodriving Control: Energy-Efficient Driving of Road Vehicles as an Optimal Control Problem. IEEE Control Systems Magazine, Institute of Electrical and Electronics Engineers, 2015; Saerens, Bart: Optimal Control Based Eco-Driving, Katholieke Universiteit Leuven, PhD, 2012. Die meisten dieser Vorschläge verwenden rechenintensive optimierungsbasierte Ansätze, um den Kraftstoff- oder Energieverbrauch über einen Zeithorizont zu minimieren. Dafür benötigen sie eine detaillierte Modellierung des spezifischen Antriebsstranges, des Kraftstoffverbrauchs und/oder des Batterieladezustands.

Weiter gibt es im Stand der Technik bereits Lösungen für eine vorausschauende Anpassung einer Längsdynamik eines Kraftfahrzeugs an bestimmte Situationen in vorausliegenden Streckenabschnitten. Speziell mit Bezug auf einen Verzögerungsvorgang eines Fahrzeugs wurden Lösungen vorgeschlagen, die auf einer mehrstufigen Verzögerungsstrategie beruhen. Beispielsweise ist aus den offengelegten Patentanmeldungen DE 10 2014 215 673 A1 und DE 10 2015 205 371 A1 der Anmelderin jeweils ein Fahrerassistenzsystem bekannt, welches bei Erkennen eines vorausliegenden Ereignisses, das eine Geschwindigkeitsreduzierung erfordert, eine ein- oder mehrstufige Verzögerungsstrategie ermittelt und nach einer Bestätigung durch den Fahrer die automatische Umsetzung der Verzögerungsstrategie veranlasst, wobei die Verzögerungsstufen der Verzögerungsstrategie in Abhängigkeit vorgegebener Parameter festgelegt werden. Die DE 10 2017 205 134 A1 der Anmelderin beschreibt ein Verzögerungsassistenzsystem für ein Kraftfahrzeug mit einem elektronisch steuerbaren automatisierten Getriebe und einer elektronischen Steuereinheit zur Steuerung von Hoch- und Rückschaltvorgängen im Getriebe. Dabei wird eine Verzögerungsstrategie zur Reduzierung der Geschwindigkeit auf eine Zielgeschwindigkeit am Ort eines vorausliegenden Ereignisses ermittelt, wobei die Verzögerungsstrategie das Ausführen eines automatischen Rückschaltvorganges umfasst und auch ohne Betätigung eines Bedienelements durch den Fahrer ausgeführt wird. Ferner sind einige von der Anmelderin hergestellte Elektrofahrzeuge bereits mit einer vorausschauenden, situationsspezifischen Antriebsfunktion ausgestattet, die eine sogenannte adaptive Verzögerung oder adaptive Rekuperation ermöglicht. Unter "Rekuperation" wird dabei im Allgemeinen die Rückgewinnung und batteriegebundene Speicherung elektrischer Energie aus (zuvor elektrisch erzeugter) Bewegungsenergie eines Elektrofahrzeugs, z.B. bei einem Bremsvorgang, verstanden.

Die EP 2 591 968 A2 beschreibt ein Verfahren, bei dem, um eine vorausschauende Fahrweise zu erleichtern, ein Ausrollweg eines Fahrzeugs ermittelt wird. Eine Anfangsgeschwindigkeit und eine Zielgeschwindigkeit des Fahrzeugs werden bestimmt. Der Ausrollweg des Fahrzeugs, in dem sich das Fahrzeug in einem Freilauf-Betriebszustand oder in einem Schubabschaltungs-Betriebszustand von der Anfangsgeschwindigkeit auf die Zielgeschwindigkeit verlangsamt, wird ermittelt. Das Ermitteln des Ausrollwegs umfasst ein Auswerten wenigstens einer Ausrollwegfunktion, die den Ausrollweg in Abhängigkeit von der Anfangsgeschwindigkeit, der Zielgeschwindigkeit und einer Mehrzahl von Fahrwiderstandsparametern in geschlossener Form angibt.

Die DE 10 2018 131 280 A1 beschreibt ein Verfahren zur Steuerung eines Verzögerungsvorgangs eines Fahrzeugs mit einem Verbrennungsmotor und einem Antriebsstrang, sowie einer Kupplung, die zwischen dem Verbrennungsmotor und dem Antriebsstrang wirksam ist und im geöffneten Zustand den Verbrennungsmotor von dem Antriebsstrang entkoppelt. Vorab und/oder während des Verzögerungsvorgangs erfolgt eine Verzögerungsberechnung, die die abhängig von dem Fahrzeug möglichen und bei dem Verzögerungsvorgang anzuwendenden Einzelvorgänge aus mehreren allgemeingültig möglichen Einzelvorgängen abhängig von einer Auswertung über den im Fahrbetrieb des Fahrzeugs bevorstehenden Streckenverlauf vorgibt.

Vor diesem Hintergrund ist es eine Aufgabe der vorliegenden Erfindung, eine Methode zum Bestimmen einer Verzögerungsstrategie für einen automatisierten Verzögerungsvorgang eines Fahrzeugs anzugeben, welche eine besonders recheneffiziente Umsetzung ermöglicht und möglichst universell einsetzbar, d.h. z.B. mit herkömmlichen Längsführungsreglern kombinierbar, ist.

Die Aufgabe wird durch die Gegenstände der unabhängigen Patentansprüche gelöst. Vorteilhafte Ausführungsformen sind in den abhängigen Ansprüchen angegeben.

Ein erster Aspekt der Erfindung betrifft ein Verfahren zum Bestimmen einer Verzögerungsstrategie für ein Fahrzeug.

Das Fahrzeug kann insbesondere ein Kraftfahrzeug sein. Unter dem Begriff Kraftfahrzeug soll dabei insbesondere ein Landfahrzeug, das durch Maschinenkraft bewegt wird, ohne an Bahngleise gebunden zu sein, verstanden werden. Ein Kraftfahrzeug in diesem Sinne kann z.B. als Kraftwagen, Kraftrad oder Zugmaschine ausgebildet sein. Beispielsweise kann es sich bei dem Fahrzeug um ein mittels einer Verbrennungskraftmaschine angetriebenes Fahrzeug, ein elektrisch angetriebenes Fahrzeug oder um ein Fahrzeug mit einem Hybridantrieb aus einer Verbrennungskraftmaschine und einem elektrischen Antrieb handeln.

Ein Schritt des Verfahrens ist ein Bestimmen einer in einem vorausliegenden Streckenabschnitt liegenden Zielposition mitsamt einer Zielgeschwindigkeit, die das Fahrzeug bei Erreichen der Zielposition haben soll, wobei die Zielgeschwindigkeit geringer als eine aktuelle Geschwindigkeit des Fahrzeugs ist.

Beispielsweise kann eine Steuervorrichtung des Fahrzeugs anhand von Kartendaten und/oder anhand von Daten einer Umfeldsensorik vorausschauend eine Zielsituation, wie z.B. den Eingang einer Kurve oder eines Kreisverkehrs oder ein eine Geschwindigkeitsbegrenzung anzeigendes Verkehrsschild, erkennen, die eine Verlangsamung des Fahrzeugs erfordert. Zur Erkennung derartiger Zielsituationen können z.B. an sich bekannte Verfahren der Fusion von Karten- und/oder Umfeldsensordaten, einschließlich an sich bekannter Methoden der künstlichen Intelligenz, eingesetzt werden.

Beispielsweise kann zunächst ein wahrscheinlichster Fahrzeugpfad in einer Karte bestimmt werden. Dies kann z.B. auf Basis einer aktiven Zielführung geschehen oder über eine separate Berechnung auf Basis der Fahrzeugposition in Verbindung mit Kartenattributen im Umfeld des Fahrzeugs (z.B. Straßenklassen, Richtungsänderungswinkel und dergleichen) und/oder einer Fahrerverhaltensinterpretation, die z.B. das Setzen eines Blinkers oder das Einordnen auf Abbiegespur Spur hinsichtlich eines wahrscheinlichsten Fahrzeugpfades auswertet. Sodann können aus Kartendaten und/oder Umfeldsensordaten entlang des prädizierten wahrscheinlichsten Fahrzeugpfades Eigenschaften wie z.B. Straßentypen und Kurvenradien sowie relevante Situationen wie z.B. beginnende Tempolimits, rote Ampeln, Kurven, Kreuzungen oder Kreisverkehre extrahiert werden. Eine solche vorausliegende Situationen kann sodann als nächste Zielsituation mitsamt einer zugehörigen Zielposition und Zielgeschwindigkeit bestimmt werden.

Ein weiterer Schritt des Verfahrens ist ein Ermitteln einer Referenztrajektorie für das Fahrzeug, wobei die Referenztrajektorie mit einem Erreichen der Zielposition mit der Zielgeschwindigkeit kompatibel ist. Damit ist gemeint, dass das Fahrzeug, wenn es sich entsprechend der Referenztrajektorie bewegt, bei Erreichen der Zielposition die Zielgeschwindigkeit haben wird.

Dabei kann sich die Referenztrajektorie insbesondere auf die Längsführung des Fahrzeugs beziehen, d.h. z. B. eine longitudinale Bewegung des Fahrzeugs entlang eines Pfades von einer aktuellen Fahrzeugposition bis zu der Zielposition beschreiben (wobei der Pfad an sich nicht linear verlaufen muss, sondern auch gekrümmt sein kann). Beispielsweise kann die Referenztrajektorie eine zeitabhängige Strecke, wie etwa einen eine Angabe über einen bis zu einem jeweils betrachteten Zeitpunkt zurückgelegten Fahrweg in Richtung der Zielposition, umfassen. Darüber hinaus kann die Referenztrajektorie eine zeitabhängige Längsgeschwindigkeit und/oder eine zeitabhängige Längsbeschleunigung des Fahrzeugs angeben.

Die Referenztrajektorie wird verfahrensgemäß auf der Grundlage von jeweiligen analytischen Funktionen für wenigstens zwei, vorzugsweise wenigstens drei, Verzögerungsmodi aus der Liste umfassend einen Segelbetrieb, einen Schleppbetrieb, einen Rekuperationsbetrieb und ein aktives Bremsen ermittelt. Dabei geben die analytischen Funktionen für jeden der wenigstens zwei, bevorzugt wenigstens drei, Verzögerungsmodi jeweils eine Geschwindigkeit und/oder einen zurückgelegten Fahrweg, d.h. z.B. eine aktuelle Distanz vom Ausgangspunkt des Verzögerungsvorgangs, in Abhängigkeit von einer Zeitvariablen an.

Unter einem Segelbetrieb wird ein vollständig oder im Wesentlichen kraftschlussfreies Ausrollen des Fahrzeugs verstanden. Bei einem Fahrzeug mit Verbrennungsmotor ist dieser Betriebszustand beispielsweise durch eine Kraftschlussunterbrechung zwischen Getriebe und (ggf. ausgeschaltetem) Motor gekennzeichnet.

Bezogen auf ein Fahrzeug mit einer elektrischen Antriebsmaschine, welches u.U. gar kein Getriebe aufweist, kann unter dem Segelbetrieb im Rahmen dieses Dokuments ein Betriebszustand verstanden werden, in welchem die elektrische Antriebsmaschine kein mechanisches Antriebsmoment erzeugt und sich auch nicht in einem Generatorbetrieb (Rekuperationsbetrieb) befindet, also keine Bewegungsenergie in elektrische Energie umwandelt. Mit anderen Worten wandelt die elektrische Antriebsmaschine in dem Segelbetrieb keine oder im Wesentlichen keine elektrische Energie in mechanische Energie um oder umgekehrt Beispielsweise wird in dem Segelzustand durch den Elektroantrieb kein oder allenfalls ein sehr geringes Bremsmoment erzeugt. Dementsprechend kann die elektrische Antriebsmaschine in dem Segelbetrieb z.B. gänzlich freidrehen und allenfalls durch die Reibungskraft von Bürsten (sofern vorhanden) oder dergleichen eine vergleichsweise geringe Verzögerung bewirken.

Unter einem (Motor-)Schleppbetrieb, der häufig auch als Motorbremse bezeichnet wird, ist ein Fahrzustand zu verstehen, bei welchem ein Kraftschluss zwischen Getriebe und Motor gegeben ist, welcher auch ohne ein aktives Bremsen für eine wirksame Verzögerung des Kraftfahrzeugs sorgt.

Ein Rekuperationsbetrieb zeichnet sich, wie bereits eingangs erwähnt, durch eine Rückgewinnung elektrischer Energie aus kinetischer Bewegungsenergie mittels einer elektrischen Antriebsmaschine eines Fahrzeugs aus. Hierdurch kann eine erhebliche Verzögerungswirkung erzielt werden.

Ein aktives Bremsen wird z.B. mittels einer dedizierten Bremsanlage, üblicherweise bei einer einstellbaren Bremsstärke, ausgeführt.

Erfindungsgemäß ist ferner vorgesehen, dass das Ermitteln der Referenztrajektorie ein Ermitteln eines oder mehrerer Umschaltzeitpunkte zwischen den wenigstens zwei, bevorzugt wenigstens drei, Verzögerungsmodi auf der Grundlage der analytischen Funktionen umfasst. Dabei kann das Ermitteln der Umschaltzeitpunkte auf der Grundlage einer parametrischen Optimierung hinsichtlich der Umschaltzeitpunkte erfolgen.

Gemäß einer Ausführungsform umfasst das Ermitteln der Referenztrajektorie ferner das Bestimmen eines Bremsstellgröße, die in dem Bremsbetrieb wirksam ist. Insbesondere kann, beispielsweise durch Minimierung einer Kostenfunktion, ein zeitlicher Verlauf der Bremsstellgröße ermittelt werden.

Gemäß einer Ausführungsform sind die analytischen Funktionen als geschlossene mathematische Ausdrücke mit der Zeitvariablen und mehreren Funktionsparametern, welche eine oder mehrere Arten von Fahrwiderständen charakterisieren, angebbar. Beispielsweise können die analytischen Funktionen mit der Zeitvariablen und den Funktionsparametern in einer Software hinterlegt sein und beim Ausführen des Verfahrens aufgerufen werden. Die Fahrwiderstände können z.B. einen Luftwiderstand und/oder einen, vorzugsweise von einer Fahrbahnneigung oder anderen vorausschauenden Fahrbahninformationen abhängigen, Rollwiderstand umfassen, die zur Verzögerung des Fahrzeugs beitragen.

Gemäß einer Ausführungsvariante können die Funktionsparameter ferner einen oder mehrere Verzögerungsstellgrößen für einen oder mehrere der genannten Verzögerungsmodi umfassen. Dabei können die Verzögerungsstellgrößen beispielsweise während einer jeweiligen Verzögerungsphase, in welcher ein jeweiliger Verzögerungsmodus aktiv ist, als zeitlich konstant angenommen sein. Beispielsweise kann eine Verzögerungsstellgrößen eine Verzögerung im Schleppbetrieb des Fahrzeugs kennzeichnen. Eine andere Verzögerungsstellgröße kann eine Verzögerung im Rekuperationsbetrieb kennzeichnen. Noch eine weitere Verzögerungsstellgröße kann eine Verzögerung durch ein aktives Bremsen charakterisieren.

Gemäß einer Ausführungsform können eine oder mehrere der analytischen Funktionen, welche für die wenigstens zwei Verzögerungsmodi den zurückgelegten Fahrweg in Abhängigkeit von der Zeitvariable angeben, in der folgenden Form geschrieben werden:

$$s(t) = A \ln\left(\tan(B\,t + C)^2 + 1\right) + D$$

Darin bezeichnet s den Fahrweg, der von der Zeitvariablen t abhängt. A, B, C, D sind zeitlich konstante Funktionsparameter. Die Funktionsparameter A, B, C, D können z.B. von Funktionsparametern betreffend Fahrwiderstände oder Verzögerungsstellgrößen für die unterschiedlichen Verzögerungsmodi abgeleitet sein bzw. diese umfassen. Dabei sollte beachtet werden, dass für die unterschiedlichen Verzögerungsmodi der oben angegebene Ausdruck s(t) jeweils eine unterschiedliche Form annehmen kann. Insbesondere können sich die Funktionsparameter A, B, C, D für die unterschiedlichen Funktionen s(t), die den unterschiedlichen Verzögerungsmodi zugeordnet sind, voneinander unterscheiden. Weiter unten werden bezogen auf ein Ausführungsbeispiel konkrete Ausdrücke der Funktionsparameter A, B, C, D für Funktionen s(t) für einen Segelbetrieb, einen Schleppbetrieb und ein aktives Bremsen angegeben. Dabei wird die Abhängigkeit von den Fahrwiderständen und Verzögerungsstellgrößen der unterschiedlichen Verzögerungsmodi deutlich.

Gemäß einer weiteren Ausführungsform, die insbesondere mit der vorstehend beschriebenen Ausführungsform betreffend eine bestimmte Form des analytischen Ausdrucks für den Fahrweg kombinierbar ist, können eine oder mehrere der analytischen Funktionen, welche für die wenigstens zwei Verzögerungsmodi die Geschwindigkeitsabhängigkeit von der Zeitvariable angeben in der folgenden Form geschrieben werden:

$$v(t) = E \tan(F\,t + G),$$

mit der Geschwindigkeit v, der Zeitvariablen t sowie konstanten Funktionsparametern E, F und G. Für die Funktionsparameter E, F, G gelten die vorstehenden Erläuterungen zu den Funktionsparametern A, B, C, D analog. Insbesondere können sich auch die Funktionsparameter E, F, G der Geschwindigkeitsfunktionen für die unterschiedlichen Verzögerungsmodi voneinander unterscheiden.

Es liegt ferner im Rahmen der Erfindung, dass das Ermitteln des oder der Umschaltzeitpunkte auf der Grundlage einer parametrischen Optimierung im Wege einer Minimierung einer Kostenfunktion erfolgen kann.

Gemäß einer Ausführungsform umfasst dabei die Kostenfunktion eine Summe aus mehreren zeitlichen integralen, wobei jedes der Integrale sich zeitlich über eine jeweilige Verzögerungsphase erstreckt die einem jeweiligen der wenigstens zwei, vorzugsweise wenigstens drei, Verzögerungsmodi zugeordnet ist. Der oder die zu ermittelnden Umschaltzeitpunkte bilden dabei obere oder untere Integralgrenzen der Integrale. Weitere Integralgrenzen können durch einen Start- und einen Endzeitpunkt des gesamten Verzögerungsvorgangs gebildet werden.

Die Kostenfunktion weist unter den Integralen für die wenigstens zwei Verzögerungsphasen gemäß einer Ausführungsvariante jeweils einen zeitabhängigen Kostenterm auf, welcher einen bis zum betrachteten Zeitpunkt erfolgten Verlust von kinetischer Energie im Vergleich zu einer anfänglichen kinetischen Energie, die das Fahrzeug zu Beginn der Verzögerung hat bzw. hatte, mit Kosten beaufschlagt. Dieser Kostenterm wirkt in vorteilhafter Weise darauf hin, dass das Fahrzeug während der Verzögerung die anfänglich gespeicherte kinetischen Energie möglichst gut ausnutzt, um schnell zu der Zielposition zu gelangen. Denn dadurch, dass der Kostenterm es "belohnt", wenn die das Fahrzeug möglichst lange mit der kinetischen Energie haushält bzw. umgekehrt einen allzu schnellen Abbau der kinetischen Energie "bestraft", rollt das Fahrzeug im Ergebnis noch möglichst lange mit einer relativ hohen Geschwindigkeit auf die Zielposition zu.

Gemäß einer Weiterbildung kann in der Kostenfunktion ferner ein Kostenterm vorgesehen sein, der das aktive Bremsen mit Kosten beaufschlagt, wie z.B. ein Kostenterm, welcher ein Quadrat einer Bremsstellgröße, etwa einer Bremsverzögerung, umfasst. Ein solcher Term kann im Ergebnis ein allzu abruptes Abbremsen, beispielsweise kurz vor dem Erreichen der Zielposition, verhindern und somit Komfort und Sicherheit befördern.

Der vorstehend als eine mögliche Ausführungsform des ersten Erfindungsaspekts beschriebene Unteraspekt betreffend einen Kostenterm, der einen bis zum betrachteten Zeitpunkt erfolgten Verlust von kinetischer Energie im Vergleich zu einer anfänglichen kinetischen Energie mit Kosten beaufschlagt, kann auch unabhängig von den weiter oben beschriebenen Merkmalen des Verfahrens nach dem ersten Erfindungsaspekts, die das Ermittelns der Referenztrajektorie auf der Grundlage von analytischen Funktionen betrifft, umgesetzt werden.

Dementsprechend wird als ein unabhängiger zweiter Aspekt der Erfindung ein Verfahren zum Bestimmen einer Verzögerungsstrategie für ein Fahrzeug angegeben, wobei das Verfahren insbesondere die folgenden Schritte umfasst: Bestimmen einer in einem vorausliegenden Streckenabschnitt liegenden Zielposition mitsamt einer Zielgeschwindigkeit, die das Fahrzeug bei Erreichen der Zielposition haben soll, wobei die Zielgeschwindigkeit geringer als eine aktuelle Geschwindigkeit des Fahrzeugs ist; und Ermitteln einer Referenztrajektorie für das Fahrzeug, die ein Erreichen der Zielposition mit der Zielgeschwindigkeit vorsieht. Dabei weist die Referenztrajektorie wenigstens zwei Verzögerungsphasen auf, in denen das Fahrzeug jeweils in einem unterschiedlichen Verzögerungsmodus aus der Liste umfassend einen Segelbetrieb, einen Schleppbetrieb, einen Rekuperationsbetrieb und ein aktives Bremsen betrieben wird. Das Ermitteln der Referenztrajektorie umfasst ein Ermitteln eines oder mehrerer Umschaltzeitpunkte zwischen den wenigstens zwei Verzögerungsmodi, wobei das Ermitteln des oder der Umschaltzeitpunkte auf der Grundlage einer Minimierung einer Kostenfunktion erfolgt. Die Kostenfunktion umfasst eine Summe aus mehreren zeitlichen Integralen, wobei jedes der Integrale sich zeitlich über eine jeweilige der Verzögerungsphasen erstreckt, wobei der oder die Umschaltzeitpunkte obere oder untere Integralgrenzen der Integrale bilden, und wobei die Kostenfunktion unter den Integralen für die wenigstens zwei Verzögerungsphasen jeweils einen zeitabhängigen Kostenterm aufweist, der einen bis zum betrachteten Zeitpunkt erfolgten Verlust von kinetischer Energie im Vergleich zu einer anfänglichen kinetischen Energie, die das Fahrzeug zu Beginn der Verzögerung hat, mit Kosten beaufschlagt.

Das Verfahren nach dem zweiten Erfindungsaspekt kann mit sämtlichen Ausführungsvarianten des Verfahrens nach dem ersten Erfindungsaspekt kombiniert werden und umgekehrt.

Gemäß einer Ausführungsform des Verfahrens nach dem ersten oder zweiten Erfindungsaspekt ist vorgesehen, dass der zeitabhängige Kostenterm ein Quadrat einer Differenz zwischen einer kinetischen Energie zum betrachteten Zeitpunkt und der anfänglichen kinetischen Energie umfasst. Es hat sich gezeigt, dass die Wahl eines so gearteten Kostenterms sowohl mit Blick auf eine recheneffiziente Lösbarkeit des Optimierungsproblems als auch auf die Eigenschaften der resultierenden Referenztrajektorien hinsichtlich Komfort und Sicherheit besonders vorteilhaft ist.

Demgemäß kann bei einer Ausführungsvariante die Kostenfunktion in der folgenden Form angegeben werden:

$$ J = \frac{1}{2} \int_{t_0}^{t_f} \left( w_u u^2 + w_{\text{kin}} \left( E_{\text{kin}}(v) - E_{\text{kin}}(v_0) \right)^2 \right) \mathrm{dt} $$

Darin bezeichnet J die Kosten, $t_0$ den Anfangszeitpunkt des Verzögerungsvorgangs, $t_f$ den Endzeitpunkt des Verzögerungsvorgangs (zu dem die Zielposition erreicht wird), $E_{\text{kin}}(v)$ die kinetische Energie zum Zeitpunkt t, $E_{\text{kin}}(v_0)$ die kinetische Energie zum Anfangszeitpunkt $t_0$ und u eine Verzögerungsstellgröße, wobei z.B. für den Schleppbetrieb, den Rekuperationsbetrieb oder den Bremsbetrieb unterschiedliche Größen u gelten können. Die Faktoren $w_u$ und $w_{\text{kin}}$ sind Konstanten.

Der zweite Term unter dem Integral der Kostenfunktion J ist der weiter oben erwähnte Kostenterm betreffend die kinetische Energie. Der erste Term unter dem Integral beaufschlagt z.B. einen aktiven Bremsvorgang oder einen Schleppbetrieb mit Kosten.

Insofern der erste Term ein aktives Bremsen mit Kosten beaufschlagt, trägt er dazu bei, dass eine möglichst energieeffiziente Verzögerungsstrategie bestimmt wird, denn für das aktive Bremsen mittels einer Bremsanlage muss Energie aufgewendet werden.

Wie oben erwähnt, steht in dem vorstehenden allgemeinen Ausdruck für die Kostenfunktion J die Größe u je nach der betrachteten Verzögerungsphase z. B. für eine aktive Bremsstellgröße, für eine Verzögerungsstellgröße im Schleppbetrieb oder für eine Verzögerungsstellgröße im Rekuperationsbetrieb. Das Zeitintegral kann nämlich in mehrere Teilintegrale für unterschiedliche Verzögerungsphasen mit entsprechenden zeitlichen Intervallgrenzen aufgeteilt werden, wie z.B. in eine Segelphase, die sich über ein erstes Zeitintervall von $t_0$ bis zu einem ersten Umschaltzeitpunkt $t_{s_1}$ erstreckt, eine Schleppphase, die sich über ein zweites Zeitintervall von dem ersten Umschaltzeitpunkt $t_{s_1}$ bis zu einem zweiten Umschaltzeitpunkt $t_{s_2}$ erstreckt, und eine aktive Bremsphase, die sich über ein drittes Zeitintervall von dem zweiten Umschaltzeitpunkt $t_{s_2}$ zu dem Endzeitpunkt $t_f$ erstreckt. Bei dieser beispielhaften Aufteilung in drei Verzögerungsphasen ist die oben allgemein als u angegebenen Verzögerungsstellgröße für die einzelnen Teilintegrale konkret wie folgt zu ersetzen:

$$u = \begin{cases} 0, & [t_0, t_{s_1}) \\ a_{\mathrm{drag}}(t), & [t_{s_1}, t_{s_2}) \\ u_{\mathrm{brake}}(t), & [t_{s_2}, t_f] \end{cases}$$

Demnach wirkt in der Segelphase keine Verzögerungsstellgröße (u = 0), in der Schleppphase wirkt die Verzögerungsstellgröße $a_{\mathrm{drag}}$ (t) und in der anschließenden aktiven Bremsphase wirkt wiederum eine andere Verzögerungsstellgröße $u_{\mathrm{brake}}$ (t). Weiter unten wird bei der Beschreibung eines Ausführungsbeispiels exemplarisch verdeutlicht, welche Gestalt die Teilintegrale für die unterschiedlichen Verzögerungsphasen annehmen können.

Gemäß einer Ausführungsform des ersten Erfindungsaspekts oder des zweiten Erfindungsaspekts und im Einklang mit der vorstehend beschriebenen beispielhaften Ausführungsvariante umfasst die Referenztrajektorie eine Segelphase, in welcher das Fahrzeug im Segelbetrieb fährt, und wenigstens eine der Segelphase zeitlich nachgelagerte weitere Verzögerungsphase, in welcher das Fahrzeug in einem Schlepp- oder Rekuperationsbetrieb fährt oder aktiv gebremst wird. Mit anderen Worten kann also die Referenztrajektorie in der Weise bestimmt werden, dass sie zeitlich nach einer Segelphase eine Schlepp-, Rekuperations- und/oder Bremsphase aufweist. Insbesondere kann gemäß einer beispielhaften Ausführungsform vorgesehen sein, dass das Fahrzeug zuerst segelt, sodann in einem Schleppbetrieb verzögert und schließlich aktiv bis auf die Zielgeschwindigkeit abgebremst wird. Eine Abfolge der entsprechenden Verzögerungsphasen kann bei der Ermittlung der Trajektorie, insbesondere bei der Lösung des Optimierungsproblems hinsichtlich der Umschaltzeitpunkte, vorgegeben werden.

Gemäß einer Ausführungsform des Verfahrens gemäß dem ersten oder zweiten Erfindungsaspekt umfasst das Verfahren ferner ein Ermitteln einer Solltrajektorie für das Fahrzeug in Abhängigkeit von der ermittelten Referenztrajektorie und ein Erzeugen einer Stellvorgabe für eine Längsführung des Fahrzeugs in Abhängigkeit von der Solltrajektorie.

Beispielsweise kann die Solltrajektorie zyklisch jeweils über einen vergleichsweise kurzen Planungshorizont von einigen Sekunden, wie z.B. 6 Sekunden, geplant werden. Insbesondere kann ein Planungshorizont der Solltrajektorie, jedenfalls zu Beginn des gesamten Verzögerungsvorgangs des Fahrzeugs, kürzer sein als ein Planungshorizont der Referenztrajektorie.

Das Ermitteln der Solltrajektorie kann beispielsweise mittels einer Optimierung, wie z.B. einer quadratischen Optimierung, hinsichtlich weiterer Kriterien, die z.B. eine Sicherheit und einen Komfort des Fahrzeugs bzw. seiner Insassen betreffen, durchgeführt werden. Dabei kann die ermittelte Solltrajektorie beispielsweise Zustandsgrößen gleicher Art wie die Referenztrajektorie umfassen, wie etwa eine zeitabhängige zurückgelegte Strecke, eine zeitabhängige Geschwindigkeit, eine zeitabhängige Beschleunigung und/oder einen zeitabhängigen Ruck.

Bei der Berechnung der Solltrajektorie kann die Referenztrajektorie z.B. in der Weise als Referenz berücksichtigt werden, dass eine im Rahmen der Bestimmung der Solltrajektorie zu minimierende Kostenfunktion Abweichungen zwischen Solltrajektoriengrößen und Referenztrajektoriengrößen mit Kosten beaufschlagt. Beispielsweise kann die Kostenfunktion einen oder mehrere Terme umfassen, die jeweils ein Quadrat einer Differenz zwischen einer (zu bestimmenden) Solltrajektoriengröße und einer entsprechenden Referenztrajektoriengröße mit Kosten beaufschlagen. Dies kann insbesondere die Trajektoriengrößen Weg, Geschwindigkeit und Beschleunigung betreffen.

Es ist auch möglich, die Referenztrajektorie in der Weise bei der Berechnung der Solltrajektorie zu berücksichtigen, dass ein zeitabhängiges Geschwindigkeitsprofil gemäß der Referenztrajektorie im Rahmen einer Optimierung zur Bestimmung einer Geschwindigkeit gemäß der Soll Trajektorien-Geschwindigkeit als eine obere Schranke verwendet wird. Alternativ oder zusätzlich kann die Referenztrajektorie bei der Bestimmung der Solltrajektorie in der Weise berücksichtigt werden, dass ein sich aus der Referenztrajektorie ergebender zeitlicher Verlauf einer Bremsstellgröße im Rahmen einer Optimierung zur Bestimmung einer Beschleunigung bzw. Verzögerung gemäß der Solltrajektorien als Schranke verwendet wird. Eine solche Beschränkung durch die Referenztrajektoriengrößen muss dabei gemäß einigen Ausführungsvarianten nicht hart sein, sondern sie kann z.B. durch die Verwendung von Slack-Variablen aufgeweicht werden.

Das Erzeugen der Stellvorgabe kann z.B. ein Erzeugen einer Beschleunigungsvorgabe für eine Längsführungsaktuatorik des Fahrzeugs in Abhängigkeit von der Solltrajektorie umfassen. Zu diesem Zweck kann die Solltrajektorie beispielsweise einem Trajektorienfolgeregler übergeben werden, welcher in Abhängigkeit von der Solltrajektorie und von Informationen über gemessene Störgrößeneinflüsse eine Beschleunigungsvorgabe an die Längsführungsaktuatorik, wie z.B. an einen Antrieb und/oder eine Bremsanlage des Fahrzeugs, ausgibt.

Es sollte beachtet werden, dass das Ermitteln einer separaten Solltrajektorie (sowie ggf. eines Trajektorienfolgereglers) ein optionaler Zwischenschritt ist. Denkbar sind auch Ausführungsformen, bei welchen die Referenztrajektorie selbst als Solltrajektorie verwendet und als solche an einen Regler oder auch direkt zur Weiterverarbeitung an einen Trajektorienfolgeregler oder an eine Längsführungsaktuatorik ausgegeben wird. Dies ist z.B. möglich, wenn die Referenztrajektorie eine Beschleunigung angibt und der Regler oder die Aktuatorik eingerichtet sind, diese Beschleunig als Sollbeschleunigung zu verarbeiten.

Allgemeiner ausgedrückt kann ein Verfahren gemäß dem ersten oder zweiten Erfindungsaspekt also ferner ein Erzeugen einer Stellvorgabe für eine Längsführung des Fahrzeugs in Abhängigkeit von der Referenztrajektorie umfassen.

Wenn die Referenztrajektorie mittels einer Längsführungsaktuatorik des Fahrzeugs umgesetzt wird oder, allgemeiner ausgedrückt, durch eine Regelstrecke weiterverarbeitet wird, kann das Verfahren gemäß dem ersten oder zweiten Erfindungsaspekt zyklisch ausgeführt werden, indem jeweils ein aktueller (z.B. mittels einer Odometrie gemessener) Zustand der Regelgröße, wie z.B. eine aktuelle tatsächliche Geschwindigkeit oder eine aktuelle tatsächliche Beschleunigung oder eine tatsächliche gefahrene Distanz, an einen Referenztrajektorienplaner, welcher die verfahrensgemäß Schritte zur Bestimmung der Referenztrajektorie ausführt, zurückgeführt wird. Dieser kann sodann die Referenztrajektorie auf der Grundlage der aktuellen Informationen neu berechnen. Dabei kann im Einklang mit einer vorstehend beschriebene Ausführungsvariante zwischen den Referenztrajektorienplaner und der Regelstrecke ein separater Solltrajektorienplaner geschaltet sein, der seinerseits wiederum mit einem eigenen, ggf. vergleichsweise kurzen, Planungshorizont von z.B. einigen Sekunden in Abhängigkeit von aktuellen tatsächlichen Größen und der Referenztrajektorie eine Solltrajektorie bestimmt. Die Regelstrecke kann beispielsweise, wie vorstehend erwähnt, einen Trajektorienfolgeregler und eine Längsführungsaktuatorik umfassen.

Ein dritter Erfindungsaspekt ist eine Datenverarbeitungsvorrichtung, die eingerichtet ist, ein Verfahren gemäß dem ersten oder zweiten Erfindungsaspekt auszuführen. Dementsprechend können Ausführungsformen der erfindungsgemäßen Datenverarbeitungsvorrichtung den in diesem Dokument beschriebenen Ausführungsformen der erfindungsgemäßen Verfahren entsprechen und umgekehrt. Die Datenverarbeitungsvorrichtung kann einen oder mehrere Prozessoren, wie z.B. einen oder mehrere Steuergeräte oder Mikrocontroller umfassen, welche zum Ausführen der Verfahren eingerichtet sind.

Ein vierter Erfindungsaspekt ist eine Software, umfassend Befehle, die bei der Ausführung der Software durch eine Datenverarbeitungsvorrichtung diese veranlassen, ein Verfahren gemäß dem ersten oder zweiten Erfindungsaspekt auszuführen. Dementsprechend kann die Software z.B. auf einem oder mehreren Prozessoren ausgeführt werden, welche die Datenverarbeitungsvorrichtung (oder Teile davon) gemäß dem dritten Erfindungsaspekt bilden bzw. welche von der Datenverarbeitungsvorrichtung umfasst sind. Dabei kann ein in der Software enthaltenes Computerprogramm auch auf mehrere separate Teilprogramme aufgeteilt sein, die z.B. jeweils auf verschiedenen, ggf. räumlich voneinander entfernten, Computern (wie z.B. mehreren separaten Prozessoren) ausgeführt werden können.

Ein fünfter Erfindungsaspekt ist ein computerlesbares Speichermedium, auf dem eine Software gemäß dem vierten Erfindungsaspekt gespeichert ist.

Im Einklang mit einigen vorstehend und nachfolgend beschriebenen Ausführungsformen liegt der Erfindung der Gedanke zu Grunde, eine sichere, komfortable und energieeffiziente Referenztrajektorie für die Verzögerung eines Fahrzeugs auf eine Zielgeschwindigkeit an einer gegebenen Zielposition mit mehreren unterschiedlichen Verzögerungsphasen in einer recheneffizienten und dadurch echtzeitfähigen Weise zu ermitteln. Insbesondere können dabei mittels einer parametrischen Optimierung im Rahmen eines hybriden Optimalregelungsproblems (Englisch: hybrid optimal control - HOC) günstige Umschaltzeitpunkte zwischen unterschiedlichen Verzögerungsmodi bestimmt werden. Dabei hat sich herausgestellt, dass durch gezielte vereinfachende Annahmen, z.B. betreffend eine zeitliche Konstanz jeweiliger Verzögerungsstellgrößen in den unterschiedlichen Verzögerungsmodi, sowie durch eine geschickte Wahl einer Kostenfunktion für die Optimierung eine besonders recheneffiziente Lösung erzielt werden kann, die zu Referenztrajektorien mit zufriedenstellenden Eigenschaften führt.

Die Referenztrajektoriengrößen können bei den hier vorgeschlagenen Verfahren vergleichsweise generisch gehalten werden und beispielsweise einen zeitlichen Verlauf von zurückgelegtem Weg, Geschwindigkeit, Beschleunigung und/oder Ruck angeben, im Unterschied etwa zu konkreten Antriebsvorgaben wie einem Drehmoment, welches sehr von Einzelheiten der Antriebsmaschine abhängen würde. Dadurch ist die vorgeschlagene Referenztrajektorienplanung leicht mit herkömmlichen und ggf. schon bestehenden Reglerarchitekturen für verschiedene Fahrzeuge kombinierbar. Bestehende Solltrajektorienplaner können also leicht um die hier vorgeschlagenen Referenztrajektorienplaner erweitert werden und müssen nicht insgesamt ersetzt werden. Beispielsweise kann ein entsprechender Referenztrajektorienplaner einem bestehenden Solltrajektorienplaner vorgeschaltet werden, wobei letzterer die Referenztrajektoriengrößen im Rahmen seiner herkömmlichen Optimierung als Referenzgrößen oder als Schranken verwenden kann. Dabei werden z.B. Komfort- und Sicherheitsanforderungen an die Trajektorienplanung, die bereits der bestehende Solltrajektorienplaner zu Grunde gelegt hat, weiterhin berücksichtigt.

Die vorgeschlagene Referenztrajektorienplanung kann gemäß einigen Ausführungsformen insbesondere unabhängig von einer Topologie des Antriebsstranges des Fahrzeugs sein. Dabei kann z.B. auf eine detaillierte Antriebsstrang- und Kraftstoffverbrauchsmodellierung verzichtet werden. Somit wird der Kalibrierungsaufwand für verschiedene Fahrzeugvarianten reduziert.

Die Erfindung wird nun anhand von Ausführungsbeispielen sowie unter Bezugnahme auf die beigefügten Zeichnungen näher erläutert.

Fig. 1    veranschaulicht beispielhaft und schematisch eine vor einem Fahrzeug liegende verzögerungsrelevante Zielsituation in Form eines Verkehrsschildes, das eine Geschwindigkeitsbegrenzung anzeigt.

Fig. 2    veranschaulicht beispielhaft und schematisch einen Verfahrensablauf zum Bestimmen einer Verzögerungsstrategie für ein Fahrzeug gemäß einem ersten Erfindungsaspekt.

Fig. 3    veranschaulicht beispielhaft und schematisch einen Verfahrensablauf zum Bestimmen einer Verzögerungsstrategie für ein Fahrzeug gemäß einem zweiten Erfindungsaspekt.

Fig. 4    veranschaulicht beispielhaft und schematisch eine Modellierung der Fahrzeuglängsführung als schaltendes System.

Fig. 5    veranschaulicht zeit- und ortsabhängige von Referenztrajektoriengrößen, die mittels einer zweidimensionalen parametrischen Optimierung bestimmt wurden.

Fig. 6    veranschaulicht beispielhaft und schematisch eine Bestimmung von Umschaltzeitpunkten anhand eines Geschwindigkeit-Weg-Diagramms.

Fig. 7    veranschaulicht beispielhaft und schematisch ein System zur Regelung der Längsführung eines Fahrzeugs.

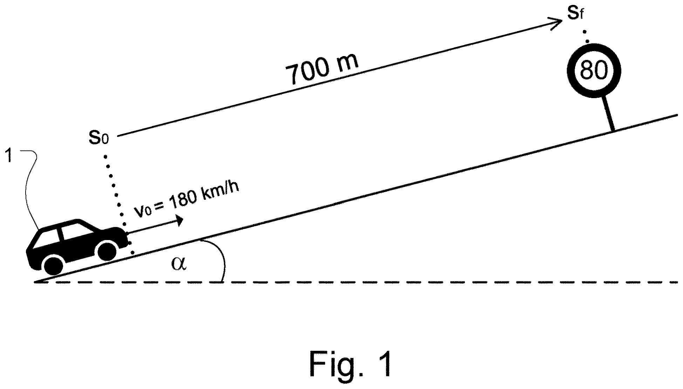

Fig. 1 zeigt schematisch eine beispielhafte Fahrsituation mit einem Fahrzeug 1, das sich aktuell, d.h. zu einem Anfangszeitpunkt $t_0$, an einer Anfangsposition $s_0$ befindet und sich konstant mit einer Anfangsgeschwindigkeit von $v_0 = 180$ km/h fortbewegt.

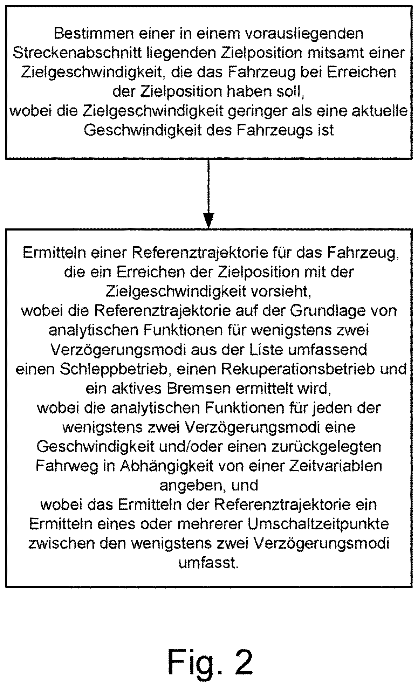

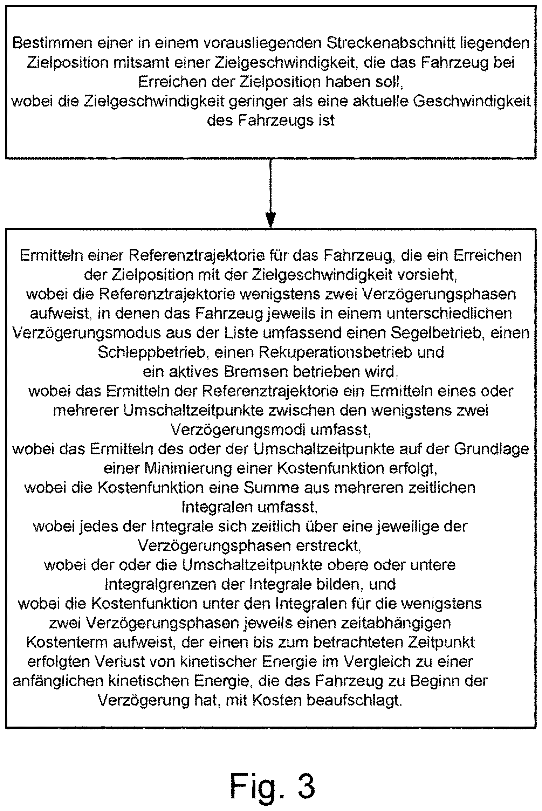

Die Fig. 2 und 3 zeigen jeweils einen Verfahrensablauf zum Bestimmen einer Verzögerungsstrategie für ein Fahrzeug.

Nachfolgend werden die Verfahrensabläufe gemäß Fig. 2 und 3 exemplarisch mit Bezug auf die in Fig. 1 veranschaulichte Fahrsituation erläutert. Dabei führt eine Datenverarbeitungseinrichtung, z.B. in Form von einem oder mehreren Steuergeräten des Fahrzeugs 1, in Echtzeit konkrete Schritte aus, die mit beiden Verfahrensabläufen gemäß Fig.2 und Fig. 3 im Einklang sind.

In einem ersten Schritt, der den Verfahrensabläufen gemäß Fig. 2 und Fig. 3 gemeinsam ist, wird eine in einem vorausliegenden Streckenabschnitt liegende Zielposition $s_f$ mitsamt einer Zielgeschwindigkeit $v_f$ von 80 km/h die das Fahrzeug 1 bei Erreichen der Zielposition $s_f$ haben soll, bestimmt. Beispielsweise wird die Zielposition $s_f$ mitsamt der Zielgeschwindigkeit $v_f$ einer digitalen Karte als Information über ein Tempolimit entnommen, wobei anhand von GPS-Daten bestimmt werden kann, dass die Zielposition $s_f$ von der aktuellen Fahrzeugposition $s_0$ 700 m entfernt ist. Da die Zielgeschwindigkeit $v_f$ geringer als die Anfangsgeschwindigkeit $v_0$, ist ein Verlangsamen des Fahrzeugs 1 nötig. Daher soll eine geeignete Verzögerungsstrategie für die Längsführung des Fahrzeugs ermittelt werden.

Bei dem Ausführungsbeispiel ist das Fahrzeug 1 ein Fahrzeug mit einer Verbrennungskraftmaschine, welches als unterschiedliche Verzögerungsmodi einen Segelbetrieb, einen Schleppbetrieb (Motorbremse) und ein aktives Bremsen unterstützt. Die zu bestimmende Verzögerungsstrategie soll demgemäß insbesondere angeben, für welche Zeit bzw. über welche Strecke hinweg, das Fahrzeug 1 segeln, schleppen und schließlich aktiv gebremst werden soll, um die Zielposition $s_f$ mit der Zielgeschwindigkeit $v_f$ zu erreichen.

Bei der Ermittlung der Verzögerungsstrategie soll eine in Fig. 1 schematisch veranschaulichte Fahrbahnneigung mit einem Neigungswinkel $\alpha$ berücksichtigt werden, da das Gefälle der Fahrbahn zur Verzögerung des Fahrzeugs 1 beiträgt. Bei dem Ausführungsbeispiel ist der Neigungswinkel $\alpha$ aus Gründen der besseren Verständlichkeit als über die gesamte Strecke von der Anfangsposition bis zur Zielposition konstant angenommen. Es ist jedoch auch möglich, abschnittsweise unterschiedliche Neigungswinkel zu berücksichtigen.

In einem weiteren Schritt wird eine Referenztrajektorie für das Fahrzeug 1 bestimmt, die mit dem Erreich der Zielposition $s_f$ mit der Zielgeschwindigkeit $v_f$ kompatibel ist.

Nachfolgend wird eine mögliche Vorgehensweise zum Ermitteln der Referenztrajektorie in größerem Detail erläutert. Dieses Ausführungsbeispiel ist im Einklang mit dem jeweiligen zweiten Verfahrensschritt sowohl gemäß Fig. 2 als auch gemäß Fig. 3.

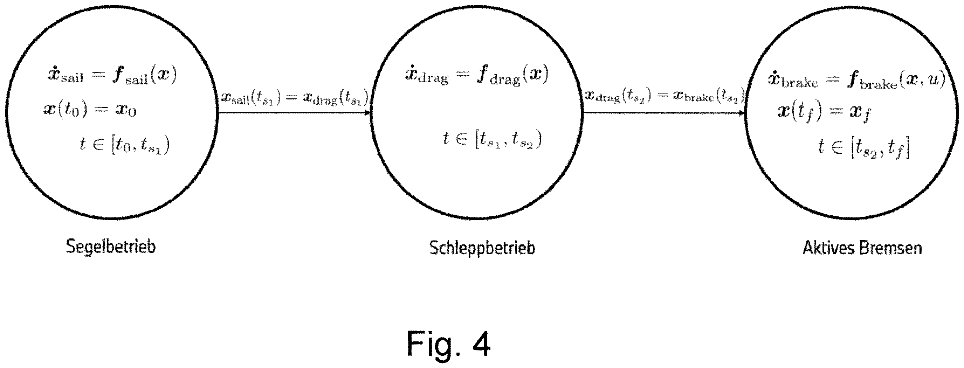

Als Grundlage für das Ermitteln der Referenztrajektorie wird das Fahrzeug 1 mitsamt den oben beschriebenen Randbedingungen als schaltendes System modelliert. Dies ist in Fig. 4 schematisch veranschaulicht.

Dabei wird die Fahrzeuglängsbewegung wird durch einen von einer Zeitvariablen t abhängigen Zustandsvektor **x** (t) beschrieben, der als Vektorkomponenten einen Weg s (t), eine Geschwindigkeit v (t) und eine Beschleunigung a (t) umfasst. Der Zustandsvektor erfüllt die Anfangsbedingung **x** $(t_0)$ = **x**$_0$, wobei der Anfangszustandsvektor **x**$_0$ insbesondere die bereits weiter oben eingeführten Anfangsgrößen $s_0$ und $v_0$ umfasst.

Bei dem Ausführungsbeispiel wird vorgegeben, dass das Fahrzeug 1 in einer ersten Verzögerungsphase, nämlich während eines Zeitintervalls von dem Angangszeitpunkt $t_0$ bis zu einem ersten Umschaltzeitpunkt $t_{s1}$, in einem Segelbetrieb ist. Dabei unterliegt das Fahrzeug 1 in der ersten Verzögerungsphase einer Systemdynamik, die sich formal in der Gleichung $\dot{\mathbf{x}}_{sail}$ = $f_{sail}$ (**x**) ausdrückt.

Zu dem ersten Umschaltzeitpunkt $t_{s1}$ wird vom Segelbetrieb auf den Schleppbetrieb umgeschaltet. Der Schleppbetrieb dauert während eines Zeitintervall vom ersten Umschaltzeitpunkt $t_{s1}$ bis zum zweiten Umschaltzeitpunkt $t_{s2}$ an. Während dieser zweiten Verzögerungsphase unterliegt das Fahrzeug 1 einer Systemdynamik gemäß der Gleichung $\dot{\mathbf{x}}_{drag}$ = $f_{drag}$ (**x**).

Zu dem zweiten Umschaltzeitpunkt $t_{s2}$ wird vom Schleppbetrieb auf einen aktiven Bremsbetrieb umgeschaltet. Das aktive Bremsen dauert während eines Zeitintervall vom zweiten Umschaltzeitpunkt $t_{s2}$ bis zum Endzeitpunkt $t_f$ des gesamten Verzögerungsvorgangs an. Während dieser dritten Verzögerungsphase unterliegt das Fahrzeug 1 einer Systemdynamik gemäß der Gleichung $\dot{\mathbf{x}}_{brake}$ = $f_{brake}$ (**x**, u), mit der Bremsstellgröße u.

In den Umschaltzeitpunkten gelten die Kontinuitätsbedingungen $x_{sail}$ $(t_{s1})$ = $x_{drag}$ $(t_{s1})$ bzw. $x_{drag}$ $(t_{s2})$ = $x_{brake}$ **$(t_{s2})$**.

Hiervon ausgehend kann die Referenztrajektorie mitsamt den Umschaltzeitpunkten im Wege einer parametrischen Optimierung als Lösung des folgenden hybriden Optimalregelungsproblems bestimmt werden:

$$\min_{t_{s_1}, t_{s_2}, t_f, u} \quad J = \frac{1}{2} \int_{t_0}^{t_f} \left( w_u u^2 + w_{\text{kin}} \left( E_{\text{kin}}(v) - E_{\text{kin}}(v_0) \right)^2 \right) \mathrm{dt}$$

s.t.

$$\dot{\boldsymbol{x}}_{\text{sail}}(t) = \boldsymbol{f}_{\text{sail}}(\boldsymbol{x}_{\text{sail}}, u) \qquad\qquad t \in [t_0, t_{s_1})$$

$$\dot{\boldsymbol{x}}_{\text{drag}}(t) = \boldsymbol{f}_{\text{drag}}(\boldsymbol{x}_{\text{drag}}, u) \qquad\qquad t \in [t_{s_1}, t_{s_2})$$

$$\dot{\boldsymbol{x}}_{\text{brake}}(t) = \boldsymbol{f}_{\text{brake}}(\boldsymbol{x}_{\text{brake}}, u) \qquad\qquad t \in [t_{s_2}, t_f]$$

$$u = \begin{cases} 0, & [t_0, t_{s_1}) \\ a_{\text{drag}}(t), & [t_{s_1}, t_{s_2}) \\ u_{\text{brake}}(t), & [t_{s_2}, t_f] \end{cases}$$

$$\boldsymbol{x}_{\text{sail}}(t_0) = \boldsymbol{x}_0$$

$$x_{\text{sail}}(t_{s_1}) = x_{\text{drag}}(t_{s_1}); \; x_{\text{drag}}(t_{s_2}) = x_{\text{brake}}(t_{s_2})$$

$$x_{\text{brake}}(t_f) = x_f$$

$$0 \leq u_{\text{brake}} \leq u_{\text{max}}$$

$$t_0 \leq t_{s_1} \leq t_{s_2} \leq t_f$$

Demgemäß sollen die Umschaltzeitpunkte $t_{s1}$, $t_{s2}$ und der Endzeitpunkt $t_f$ so bestimmt werden, dass die Kostenfunktion J minimal ist. Dabei sind die oben angegebenen Anfangs-, Kontinuitäts- und Endbedingungen sowie die oben angegebenen Beschränkungen hinsichtlich einer Reihenfolge der verschiedenen Zeitpunkte einzuhalten. Darüber hinaus gibt es eine Beschränkung der Bremsstellgröße $u_{\text{brake}}$ dahingehend, dass diese eine maximale Bremsverzögerung $u_{\text{max}}$ nicht überschreiten darf.

Das Integral der Kostenfunktion J kann als einer Summe aus drei Teilintegralen für die drei Verzögerungsphasen mit den entsprechenden Anfangs-, End- bzw. Umschaltzeitpunkten als zeitlichen Intervallgrenzen ausgeschrieben werden. Dabei ist die in dem obigen Integralausdruck allgemein als u angegebenen Verzögerungsstellgröße für die einzelnen Teilintegrale konkret gemäß der oben angegebenen Vorschrift zu ersetzen. Demnach wirkt in der Segelphase keine Verzögerungsstellgröße (u = 0), in der Schleppphase wirkt die Verzögerungsstellgröße $a_{\text{drag}}(t)$ und in der anschließenden aktiven Bremsphase wirkt wiederum eine andere Verzögerungsstellgröße $u_{\text{brake}}(t)$.

Die Kostenfunktion J weist unter den integralen für jede Verzögerungsphase einen zeitabhängigen Kostenterm auf, welcher einen bis zum betrachteten Zeitpunkt erfolgten Verlust von kinetischer Energie $E_{\text{kin}}(v)$ im Vergleich zu einer anfänglichen kinetischen Energie $E_{\text{kin}}(v_0)$, die das Fahrzeug zu Beginn der Verzögerung hat bzw. hatte, mit Kosten beaufschlagt. Konkret umfasst dieser Kostenterm ein Quadrat der Differenz zwischen der kinetischen Energie $E_{\text{kin}}(v)$ zum betrachteten Zeitpunkt und der anfänglichen kinetischen Energie $E_{\text{kin}}(v_0)$, mit einem konstanten Vorfaktor $w_{\text{kin}}$.

Die Gleichung für die Systemdynamik in dem Segelbetrieb kann wie folgt ausgeschrieben werden:

$$\dot{x}_{\text{sail}} = \begin{bmatrix} \dot{s}_{\text{sail}} \\ \dot{v}_{\text{sail}} \end{bmatrix}$$

$$= \begin{bmatrix} v_{\text{sail}} \\ -\frac{\rho A_f c_d}{2m} v_{\text{sail}}^2 - g \sin(\alpha) - c_r g \cos(\alpha) \end{bmatrix}$$

$$= \begin{bmatrix} v_{\text{sail}} \\ -a_{\text{air}} v_{\text{sail}}^2 - a_{\text{sail}} \end{bmatrix}$$

Darin bezeichnet $a_{\text{air}} = -(\rho A_f c_d)/(2m)$ eine Luftwiderstandskoeffizienten, $c_r$ einen Rollwiderstandskoeffizienten und g die Erdbeschleunigung. Im letzten Schritt wurde ersetzt: $a_{\text{sail}} = g \sin(\alpha) - c_r g \cos(\alpha)$, mit dem hier als über die gesamte Verzögerungsstrecke konstant angenommenen Fahrbahnneigungswinkel $\alpha$.

Die Gleichung für die Systemdynamik in dem Schleppbetrieb kann wie folgt ausgeschrieben werden:

$$\dot{\boldsymbol{x}}_{\text{drag}} = \begin{bmatrix} \dot{s}_{\text{drag}} \\ \dot{v}_{\text{drag}} \end{bmatrix}$$

$$= \begin{bmatrix} v_{\text{drag}} \\ -\frac{\rho A_f c_d}{2m} v_{\text{drag}}^2 - g\sin(\alpha) - c_r g\cos(\alpha) - a_{\text{drag}} \end{bmatrix}$$

$$= \begin{bmatrix} v_{\text{drag}} \\ -a_{\text{air}} v_{\text{drag}}^2 - a_{\text{sail}} - a_{\text{drag}} \end{bmatrix}$$

Darin bezeichnet $a_{\text{drag}}$ eine Schleppverzögerung durch die Wirkung der Motorbremse.

Die Gleichung für die Systemdynamik während des aktiven Bremsens kann wie folgt ausgeschrieben werden:

$$\dot{\boldsymbol{x}}_{\text{brake}} = \begin{bmatrix} \dot{s}_{\text{brake}} \\ \dot{v}_{\text{brake}} \end{bmatrix}$$

$$= \begin{bmatrix} v_{\text{drag}} \\ -\frac{\rho A_f c_d}{2m} v_{\text{drag}}^2 - g\sin(\alpha) - c_r g\cos(\alpha) - a_{\text{drag}} \end{bmatrix}$$

$$= \begin{bmatrix} v_{\text{brake}} \\ -a_{\text{air}} v_{\text{brake}}^2 - a_{\text{sail}} - u_{\text{brake}} \end{bmatrix}$$

Darin bezeichnet die Verzögerungsstellgröße $u_{\text{brake}}$ eine durch das aktive Bremsen bewirkte Bremsverzögerung.

Für die weiteren Berechnungen im Rahmen dieses Ausführungsbeispiels wird vereinfachend angenommen, dass sowohl die Verzögerungsstellgröße im Schleppbetrieb $a_{\text{drag}}$ als auch die Verzögerungsstellgröße beim aktiven Bremsen $u_{\text{brake}}$ während der Schlepp- bzw. Bremsverzögerungsphase zeitlich konstant sind. Dies ermöglicht eine einfache und besonders recheneffiziente Ermittlung der Referenztrajektorie durch eine parametrische Optimierung hinsichtlich der Schaltzeitpunkte. Vgl. Xuping, Xu; Antsaklis, P.J.: Optimal Control of Switched Systems based on Parameterization of the Switching Instants. IEEE Transactions on Automatic Control, 2004.

Es sollte jedoch beachtet werden, dass eine Lösung des hybriden Optimalregelungsproblems grundsätzlich auch ohne diese vereinfachenden Annahmen bezüglich der Verzögerungsstellgrößen möglich ist. Für eine analytische Lösung sind dann allerdings im Gegenzug andere Näherungen, wie z.B. eine Vereinfachung der Kostenfunktion und eine Linearisierung der Verzögerungsmodi erforderlich. Eine numerische Lösung führt auf ein allenfalls mit großem Rechenaufwand lösbares Randwertproblem. Vgl. Pakniyat, Ali; Caines, Peter E.: On the Hybrid Minimum Principle. IEEE Transactions on Automatic Control. 2020.

Unter der Annahme konstanter Verzögerungsstellgrößen können als analytische Lösungen der oben angegebenen Differentialgleichungen für die Segel- und Schleppphase die folgenden analytischen Funktionen für eine jeweilige Geschwindigkeit und einen jeweiligen zurückgelegten Fahrweg in Abhängigkeit von der Zeitvariablen t angegeben werden:

$$s_{\text{sail}}(t) = -\frac{1}{2a_{\text{air}}}\ln\left(\tan(b_2 t + c_1)^2 + 1\right) + c_2$$

$$v_{\text{sail}}(t) = b_1 \tan(b_2 t + c_1)$$

$$s_{\text{drag}}(t) = -\frac{1}{2a_{\text{air}}} \ln\left(\tan(b_4 t + c_3(t_{s_1}))^2 + 1\right) + c_4(t_{s_1})$$

$$v_{\text{drag}}(t) = b_3 \tan(b_4 t + c_3(t_{s_1}))$$

Dabei leiten sich die konstanten Funktionsparameter $b_1$, $b_2$, $b_3$, $b_4$ wie folgt aus den weiter oben eingeführten Größen $a_{\text{sail}}$, $a_{\text{drag}}$ und $a_{\text{air}}$ ab:

$$b_1 = \sqrt{\frac{a_{\text{sail}}}{a_{\text{air}}}}$$

$$b_2 = -\sqrt{a_{\text{air}} a_{\text{sail}}}$$

$$b_3 = \sqrt{\frac{a_{\text{sail}} + a_{\text{drag}}}{a_{\text{air}}}}$$

$$b_4 = -\sqrt{a_{\text{air}}(a_{\text{sail}} + a_{\text{drag}})}$$

Die Funktionsparameter $c_1$ und $c_2$ werden so bestimmt, dass die Anfangsbedingung $\mathbf{x}_{\text{sail}}(0) = \mathbf{x}_0$ erfüllt ist. Die Funktionsparameter $c_3$ und $c_4$ werden aus der Kontinuitätsbedingung $\mathbf{x}_{\text{sail}}(t_{s1}) = \mathbf{x}_{\text{drag}}(t_{s1})$ bestimmt.

Hinsichtlich der oben angegebenen Differentialgleichung für $\mathbf{x}_{\text{brake}}$ lässt sich mathematisch beweisen, dass eine reelle Bremsstellgröße $u_{\text{brake}}$ existiert, die das System in endlicher Zeit $t_f$ in den gewünschten Endzustand mit der Zielgeschwindigkeit $v_f$ and der Zielposition $s_f$ überführt.

Konkret ergeben sich die folgenden analytischen Ausdrücke für die Endzeit $t_f$ und die Bremsstellgröße $u_{\text{brake}}$, welche parametrisch von den Umschaltzeitpunkten $t_{s1}$, $t_{s2}$ abhängen:

$$u_{\text{brake}}(t_{s_1}, t_{s_2}) = \frac{a_{\text{air}}\left(v_{\text{drag}}^2(t_{s_2}) \exp\left[-2a_{\text{air}}\left(s_f - s_{\text{drag}}(t_{s_2})\right)\right] - v_f^2\right)}{1 - \exp\left[-2a_{\text{air}}\left(s_f - s_{\text{drag}}(t_{s_2})\right)\right]} - a_{\text{sail}}$$

$$t_f(t_{s_1}, t_{s_2}) = \frac{1}{\sqrt{a_{\text{air}}(a_{\text{sail}} + u_{\text{brake}})}} \left(\arctan\left(\frac{a_{\text{air}} v_{\text{drag}}(t_{s_2})}{\sqrt{u_{\text{brake}} + a_{\text{sail}}}}\right) - \arctan\left(\frac{a_{\text{air}} v_f}{\sqrt{u_{\text{brake}} + a_{\text{sail}}}}\right)\right)$$

Als analytische Lösung der oben angegebenen Differentialgleichung für die Bremsphase können die folgenden analytischen Funktionen angegeben werden:

$$s_{\text{brake}}(t) = -\frac{1}{2a_{\text{air}}} \ln\left(\tan(b_6 t + c_5(t_{s_1}, t_{s_2}))^2 + 1\right) + c_6(t_{s_1}, t_{s_2})$$

$$v_{\mathrm{brake}}(t) = b_5 \tan\left(b_6 t + c_5\left(t_{s_1}, t_{s_2}\right)\right)$$

Dabei hängen die konstanten Funktionsparameter $b_5$ und $b_6$ folgendermaßen von den Größen $a_{\mathrm{sail}}$, $a_{\mathrm{air}}$ und $u_{\mathrm{brake}}$ ab:

$$b_5 = \sqrt{\frac{a_{\mathrm{sail}} + u_{\mathrm{brake}}\left(t_{s_1}, t_{s_2}\right)}{a_{\mathrm{air}}}}$$

$$b_6 = -\sqrt{a_{\mathrm{air}}\left(a_{\mathrm{sail}} + u_{\mathrm{brake}}\left(t_{s_1}, t_{s_2}\right)\right)}$$

Die weiteren Funktionsparameter $c_5$ und $c_6$ werden aus der Kontinuitätsbedingung $x_{\mathrm{drag}}\,(t_{s2}) = x_{\mathrm{brake}}\,(t_{s2})$ bestimmt.

Aufgrund dieser Vorüberlegungen kann die Kostenfunktion J nun hinsichtlich der Umschaltzeitpunkte $t_{s1}$ und $t_{s2}$ parametrisiert werden:

$$J = \frac{1}{2}\int_{t_0}^{t_{s_1}} w_{\mathrm{kin}}\left(v_{\mathrm{sail}}^2(t) - v_0^2\right)^2 \mathrm{dt} + \frac{1}{2}\int_{t_{s_1}}^{t_{s_2}}\left(w_u a_{\mathrm{drag}}^2 + w_{\mathrm{kin}}\left(v_{\mathrm{drag}}^2(t) - v_0^2\right)^2\right)\mathrm{dt} +$$

$$\frac{1}{2}\int_{t_{s_2}}^{t_f}\left(w_u u_{\mathrm{brake}}^2 + w_{\mathrm{kin}}\left(v_{\mathrm{brake}}^2(t) - v_0^2\right)^2\right)\mathrm{dt} = J(t_{s_1}, t_{s_2})$$

Hiervon ausgehend kann ein Problem der parametrischen Optimierung für die transformierten Variablen

$$\Delta t_{\mathrm{sail}} = t_{s_1} - t_0$$

$$\Delta t_{\mathrm{drag}} = t_{s_2} - t_{s_1}$$

wie folgt formuliert werden:

$$\min_{\Delta t_{\mathrm{sail}}, \Delta t_{\mathrm{drag}}} J(\Delta t_{\mathrm{sail}}, \Delta t_{\mathrm{drag}})$$

s.t.

$$u_{\mathrm{brake}}(\Delta t_{\mathrm{sail}}, \Delta t_{\mathrm{drag}}) \leq u_{\max}$$

$$0 \leq \Delta t_{\mathrm{sail}}$$

$$0 \leq \Delta t_{\mathrm{drag}}$$

Dieses parametrische Optimierungsproblem ist mit recheneffizienten Standardverfahren numerisch lösbar, d. h. $t_{s1}$ und $t_{s2}$ können numerisch so bestimmt werden, dass die Kostenfunktion J minimiert wird. Wenn die Umschaltzeiten $t_{s1}$ und $t_{s2}$ bekannt sind, ist auf der Grundlage der oben angegebenen analytischen Ausdrücke für den Weg und die Geschwindigkeit in den drei Verzögerungsphasen die gesuchte Referenztrajektorie bekannt.

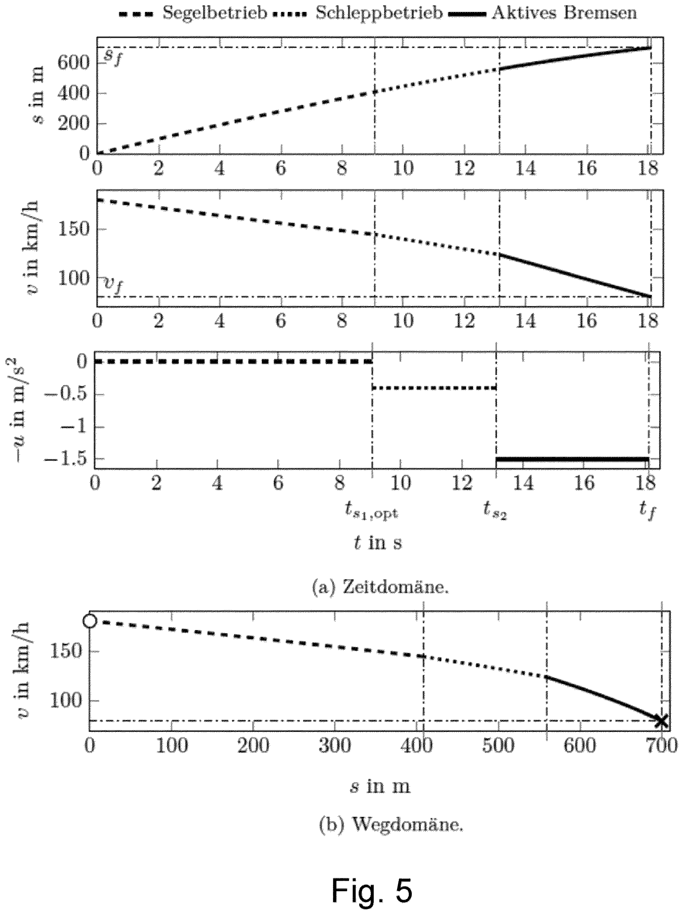

Die Fig. 5 veranschaulicht eine Lösung für die Parameter $s_0 = 0$, $v_0 = 180$ km/h, $s_f = 700$ m, $v_f = 80$ km/h, $\alpha = 2°$, $a_{\mathrm{drag}} = 0{,}4$ m/s$^2$, $w_u = 1$ und $w_{\mathrm{kin}} = 1\mathrm{e}^{-6}$.

Dabei sind in den oberen drei Diagrammen (Fig. 5 (a)) Verläufe des Wegs s in Metern, der Geschwindigkeit v in km/h bzw. der Verzögerungsstellgröße u in m/s$^2$ jeweils in Abhängigkeit von der Zeit t in Sekunden dargestellt. Zwei senkrechte gestrichelte Linien markieren die optimalen Umschaltzeitpunkte $t_{s1}$ (linke gestrichelte Linie) und $t_{s2}$ (rechte gestrichelte Linie).

In dem unteren Diagramm (Fig. 5 (b)) ist die Geschwindigkeit v in km/h über dem zurückgelegten Weg s in Metern aufgetragen, wobei zwei senkrechte gestrichelte Linien die Positionen markieren, an welchen das Fahrzeug 1 sich zu den Umschaltzeitpunkten $t_{s1}$ und $t_{s2}$ befinden wird.

Die Referenztrajektorienplanung entscheidet bei diesem Ausführungsbeispiel also, dass es optimal ist, ca. die ersten 410 m zu segeln, danach ca. 150 m zu schleppen, und anschließend mit einer Verzögerung von ca. 1,5 m/s^2 sicher und komfortable die letzten ca. 140 m aktiv zu bremsen, um zielgenau das neue Tempolimit von 80 km/h einzuhalten.

Wenn die Größe der Bremsverzögerung $u_{brake}$ von vornherein fest vorgegeben wird, lässt sich die erforderliche Rechenzeit stark weiter verringern, indem das Optimierungsproblem auf eine parametrische eindimensionale Optimierung reduziert wird. Unter dieser Annahme betreffend die Bremsverzögerung $u_{brake}$ kann eine freie Variable eliminiert und z.B. der zweite Umschaltzeitpunkt $t_{s2}$ in Abhängigkeit von dem ersten Umschaltzeitpunkt $t_{s1}$ ausgedrückt werden, d.h. $t_{s2} = t_{s2}(t_{s1})$. Das Optimierungsproblem kann dann wie folgt formuliert werden:

$$\min_{t_{s_1}} \quad J(t_{s_1})$$

s.t.

$$0 \leq t_{s_1} \leq t_{s_1,\max}$$

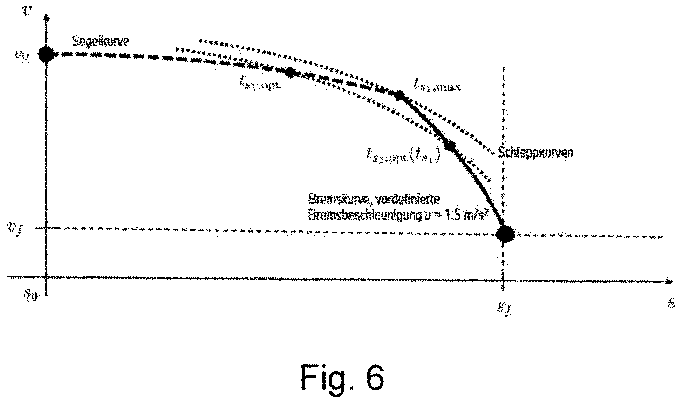

Die Fig. 6 veranschaulicht graphisch anhand eines Geschwindigkeit-Weg-Diagramms für die zu ermittelnde Referenztrajektorie, wie im Fall einer fest vorgegebener Bremsverzögerung $u_{brake}$ (hier: $u_{brake}$ = 1,5 m/s$^2$) eine obere Schranke $t_{s1,max}$ für den ersten Umschaltzeitpunkt sowie die gesuchten optimalen ersten und zweiten Umschaltzeitpunkte $t_{s1,opt}$ bzw. $t_{s2,opt}(t_{s1})$ aus den bekannten Kurvenverläufen für die wegabhängigen Geschwindigkeiten v (s) in den drei Verzögerungsphasen bestimmt werden können. Dabei ergibt sich $t_{s1,max}$ als Schnittstelle der bei der Anfangsposition $s_0$ mit der Anfangsgeschwindigkeit $v_0$ startenden Geschwindigkeitskurve für den Segelbetrieb (gestrichelte Kurve in Fig. 6) und der bei der Zielposition $s_f$ mit der Zielgeschwindigkeit $v_f$ endenden Geschwindigkeitskurve für den aktiven Bremsbetrieb (durchgezogene Kurve in Fig. 6). Der optimale erste Umschaltzeitpunkt $t_{s1,opt}$ kann sodann mit wenig numerischem Rechenaufwand oder sogar analytisch als Lösung des oben angegebenen eindimensionalen Optimierungsproblems bestimmt werden. Der optimale zweite Umschaltzeitpunkt $t_{s2,opt}$ ergibt sich schließlich als Schnittstelle derjenigen Geschwindigkeitskurve für den Schleppbetrieb (untere gepunktete Kurve in Fig. 6), die die Geschwindigkeitskurve für den Segelbetrieb in dem optimalen ersten Umschaltzeitpunkt $t_{s1,opt}$ schneidet, mit der Geschwindigkeitskurve für den aktiven Bremsbetrieb.

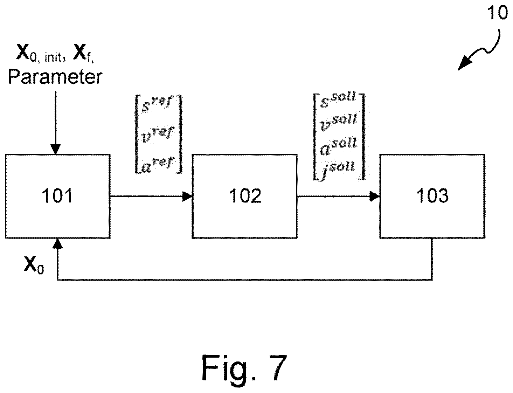

Fig. 7 zeigt beispielhaft und schematisch ein System 10 zur Regelung der Längsführung eines Fahrzeugs, wie z.B. des Fahrzeugs 1. Das System 10 umfasst einen Referenztrajektorienplaner 101, einen Solltrajektorienplaner 102 und eine Regelstrecke 103.

Der Referenztrajektorienplaner 101 ist eingerichtet, in der vorstehend beschriebenen Weise in Abhängigkeit von einem initialen Anfangszustand $x_0$, einem Zielzustand $x_f$ und weiteren Parametern (z.B. betreffend Fahrwiderstände) eine Referenztrajektorie zur Verzögerung des Fahrzeugs 1 auf eine Zielgeschwindigkeit $v_f$ an einer Zielposition $s_f$ als Lösung eines hybriden Optimalregelungsproblems zu ermitteln. Die Referenztrajektorie gibt einen jeweiligen zeitlichen Verlauf eines Referenzwegs $s^{ref}$, einer Referenzgeschwindigkeit $v^{ref}$ und einer Referenzbeschleunigung $a^{ref}$ an. Ein zeitlicher Planungshorizont des Referenztrajektorienplaners 101 erstreckt sich von dem Anfangszeitpunkt $t_0$ bis zu dem Endzeitpunkt $t_f$, an dem das Fahrzeug 1 gemäß der Referenztrajektorie die Zielposition $s_f$ erreichen wird.

Der Solltrajektorienplaner 102 ist eingerichtet, in Abhängigkeit von der Referenztrajektorie eine Solltrajektorie zu planen, die einen jeweiligen Verlauf eines Sollwegs $s^{soll}$, einer Sollgeschwindigkeit $v^{soll}$, einer Sollbeschleunigung $a^{soll}$ und eines Sollrucks $j^{soll}$ angibt. Das Ermitteln der Solltrajektorie kann beispielsweise im Rahmen einer modellprädiktiven Regelung mittels einer quadratischen Optimierung hinsichtlich weiterer Kriterien, die z.B. Sicherheit und Komfort betreffen, durchgeführt werden. Dabei kann ein zeitlicher Planungshorizont des Solltrajektorienplaners 102 sich jeweils über einige Sekunden, wie z.B. 6 Sekunden, in die Zukunft erstrecken. Über den Planungshorizont verteilt können in einem kürzeren Zeitabstand von z.B. 0,2 Sekunden N Stützstellen für die Solltrajektorienplanung vorgesehen sein.

Bei der Berechnung der Solltrajektorie kann die Referenztrajektorie als Referenz berücksichtigt werden. Beispielsweise können bei der Optimierung die Größen s, v, a und j so bestimmt werden, dass die folgende Kostenfunktion minimiert wird:

$$J = \sum_{k=0}^{N} l(k)$$

$$l(k) = w_s(s - s^{\text{ref}})^2 + w_v(v - v^{\text{ref}})^2 + w_a(a - a^{\text{ref}})^2 + w_j j^2 + w_u u^2$$

Dabei ist k ein Index für eine jeweilige Stützstelle entlang des Planungshorizonts des Solltrajektorienplaners 102.

Es ist auch möglich, die Solltrajektorienplanung in der Weise mit der Referenztrajektorienplanung zu verbinden, dass das zeitabhängiges Geschwindigkeitsprofil $v^{\text{ref}}$ gemäß der Referenztrajektorie im Rahmen der Optimierung zur Bestimmung der Sollgeschwindigkeit $v^{\text{soll}}$ eine obere Schranke $v_{\text{max}}$ darstellt. Gemäß einer Ausführungsvariante muss dabei die obere Schranke nicht hart sein, sondern sie kann z.B. mittels einer Slack-Variablen $\varepsilon_{v,\text{max}}$ aufgeweicht werden. Bei dieser Ausführungsvariante kann die zu minimierende Kostenfunktion mitsamt der aufgeweichten Beschränkung für die Geschwindigkeit z.B. in der folgenden Weise angegeben werden:

$$J = \sum_{k=0}^{N} l(k)$$

$$l(k) = -w_{s_{\text{lin}}}s + w_a a^2 + w_j j^2 + w_u u^2$$

$$0 \leq v \leq v_{\text{max}} + \epsilon_{v_{\text{max}}}$$

Als eine weitere mögliche Alternative kann die Referenzbeschleunigung als untere Schranke $a_{\text{min}}$ für die zu bestimmende Sollbeschleunigung verwendet werden, wobei die Beschränkung gemäß einer Ausführungsvariante mittels einer Slack-Variablen $\varepsilon_{a,\text{min}}$ aufgeweicht werden kann. Bei dieser Ausführungsvariante kann die zu minimierende Kostenfunktion mitsamt der aufgeweichten Beschränkung für die Beschleunigung z.B. in der folgenden Weise angegeben werden:

$$J = \sum_{k=0}^{N} l(k)$$

$$l(k) = -w_{s_{\text{lin}}}s + w_v(v - v_f)^2 + w_a a^2 + w_j j^2 + w_u u^2$$

$$a_{\text{min}} - \epsilon_{a_{\text{min}}} \leq a$$

Die Regelstrecke 103 umfasst eine Längsführungsaktuatorik, wie z.B. einen Antrieb und eine Bremsanlage, des Fahrzeugs 1. Beispielsweise kann im Rahmen der Regelstrecke 103 die Sollbeschleunigung $a^{\text{soll}}$ als eine Stellvorgabe für die Längsführungsaktuatorik verwendet werden. Es ist aber auch möglich, dass die Regelstrecke einen oder mehrere der Trajektorienplanung unterlagerte Regler, wie z.B. einen Trajektorienfolgeregler, umfasst, welcher in Abhängigkeit von der Solltrajektorie und von Informationen über aktuelle gemessene Störgrößeneinflüsse eine konkrete Stellvorgabe für die Längsführungsaktuatorik erzeugt, etwa in Form einer Vorgabe eines durch die Längsführungsaktuatorik umzusetzendes Antriebsmoments oder einer durch die Längsführungsaktuatorik umzusetzenden Beschleunigung.

Dabei führt das System 10 die Längsführungsregelung zyklisch aus, indem jeweils ein aktueller (z.B. mittels einer Odometrie gemessener) Zustand, wie z.B. eine aktuelle tatsächliche Geschwindigkeit oder eine aktuelle tatsächliche Beschleunigung oder eine tatsächliche gefahrene Distanz, an den Referenztrajektorienplaner 101 zurückgeführt wird. Dieser kann sodann jeweils eine aktualisierte Referenztrajektorie mit dem zurückgeführten aktuellen Zustand $\mathbf{x}_0$ als Anfangszustand berechnen.

**Patentansprüche**

1. Verfahren zum Bestimmen einer Verzögerungsstrategie für ein Fahrzeug (1), wobei das Verfahren umfasst:

   - Bestimmen einer in einem vorausliegenden Streckenabschnitt liegenden Zielposition mitsamt einer Zielgeschwindigkeit, die das Fahrzeug (1) bei Erreichen der Zielposition haben soll, wobei die Zielgeschwindigkeit geringer als eine aktuelle Geschwindigkeit des Fahrzeugs (1) ist; und
   - Ermitteln einer Referenztrajektorie für das Fahrzeug (1), die ein Erreichen der Zielposition mit der Zielgeschwindigkeit vorsieht,
   wobei die Referenztrajektorie auf der Grundlage von analytischen Funktionen für wenigstens zwei Verzögerungsmodi aus der Liste umfassend

   • einen Segelbetrieb,
   • einen Schleppbetrieb,
   • einen Rekuperationsbetrieb, und
   • ein aktives Bremsen

   ermittelt wird, **dadurch gekennzeichnet, dass** die analytischen Funktionen für jeden der wenigstens zwei Verzögerungsmodi eine Geschwindigkeit und/oder einen zurückgelegten Fahrweg in Abhängigkeit von einer Zeitvariablen angeben, und
   dass das Ermitteln der Referenztrajektorie ein Ermitteln eines oder mehrerer Umschaltzeitpunkte zwischen den wenigstens zwei Verzögerungsmodi auf der Grundlage der analytischen Funktionen umfasst.

2. Verfahren nach Anspruch 1, wobei die analytischen Funktionen als geschlossene mathematische Ausdrücke mit der Zeitvariablen und mehreren Funktionsparametern, welche eine oder mehrere Arten von Fahrwiderständen charakterisieren, angebbar sind.

3. Verfahren nach Anspruch 2, wobei die Funktionsparameter ferner einen oder mehrere Verzögerungsstellgrößen für einen oder mehrere der Verzögerungsmodi umfassen.

4. Verfahren nach einem der vorhergehenden Ansprüche, wobei eine oder mehrere der analytischen Funktionen, welche für die wenigstens zwei Verzögerungsmodi den zurückgelegten Fahrweg in Abhängigkeit von der Zeitvariable angeben, sich in der folgenden Form angeben lassen:

$$s(t) = A \ln\left(\tan(B\,t + C)^2 + 1\right) + D \,,$$

mit dem Fahrweg s, der Zeitvariablen t und konstanten Funktionsparametern A, B, C, D.

5. Verfahren nach einem der vorhergehenden Ansprüche, wobei eine oder mehrere der analytischen Funktionen, welche für die wenigstens zwei Verzögerungsmodi die Geschwindigkeit in Abhängigkeit von der Zeitvariable angeben, sich in der folgenden Form angeben lassen:

$$v(t) = E\,\tan(F\,t + G),$$

mit der Geschwindigkeit v, der Zeitvariablen t und konstanten Funktionsparametern E, F, G.

6. Verfahren nach einem der vorhergehenden Ansprüche,

   wobei das Ermitteln des oder der Umschaltzeitpunkte auf der Grundlage einer Minimierung einer Kostenfunktion erfolgt,
   wobei die Kostenfunktion eine Summe aus mehreren zeitlichen Integralen umfasst, wobei jedes der Integrale sich zeitlich über eine jeweilige Verzögerungsphase erstreckt, die einem jeweiligen der wenigstens zwei Verzögerungsmodi zugeordnet ist,
   wobei der oder die Umschaltzeitpunkte obere oder untere Integralgrenzen der Integrale bilden, und
   wobei die Kostenfunktion unter den Integralen für die wenigstens zwei Verzögerungsphasen jeweils einen zeitabhängigen Kostenterm aufweist, der einen bis zum betrachteten Zeitpunkt erfolgten Verlust von kinetischer Energie im Vergleich zu einer anfänglichen kinetischen Energie, die das Fahrzeug (1) zu Beginn der Verzögerung hat, mit Kosten beaufschlagt.

7. Verfahren zum Bestimmen einer Verzögerungsstrategie für ein Fahrzeug (1),

wobei das Verfahren umfasst:

- Bestimmen einer in einem vorausliegenden Streckenabschnitt liegenden Zielposition mitsamt einer Zielgeschwindigkeit, die das Fahrzeug (1) bei Erreichen der Zielposition haben soll, wobei die Zielgeschwindigkeit geringer als eine aktuelle Geschwindigkeit des Fahrzeugs (1) ist; und
- Ermitteln einer Referenztrajektorie für das Fahrzeug (1), die ein Erreichen der Zielposition mit der Zielgeschwindigkeit vorsieht,

wobei die Referenztrajektorie wenigstens zwei Verzögerungsphasen aufweist, in denen das Fahrzeug (1) jeweils in einem unterschiedlichen Verzögerungsmodus aus der Liste umfassend

• einen Segelbetrieb,
• einen Schleppbetrieb,
• einen Rekuperationsbetrieb, und
• ein aktives Bremsen

betrieben wird,
**dadurch gekennzeichnet, dass**
das Ermitteln der Referenztrajektorie ein Ermitteln eines oder mehrerer Umschaltzeitpunkte zwischen den wenigstens zwei Verzögerungsmodi umfasst, wobei das Ermitteln des oder der Umschaltzeitpunkte auf der Grundlage einer Minimierung einer Kostenfunktion erfolgt,
dass die Kostenfunktion eine Summe aus mehreren zeitlichen Integralen umfasst,
wobei jedes der Integrale sich zeitlich über eine jeweilige der Verzögerungsphasen erstreckt,
dass der oder die Umschaltzeitpunkte obere oder untere Integralgrenzen der Integrale bilden, und
dass die Kostenfunktion unter den Integralen für die wenigstens zwei Verzögerungsphasen jeweils einen zeitabhängigen Kostenterm aufweist, der einen bis zum betrachteten Zeitpunkt erfolgten Verlust von kinetischer Energie im Vergleich zu einer anfänglichen kinetischen Energie, die das Fahrzeug (1) zu Beginn der Verzögerung hat, mit Kosten beaufschlagt.

8. Verfahren nach Anspruch 6 oder 7,
wobei der zeitabhängige Kostenterm ein Quadrat einer Differenz zwischen einer kinetischen Energie zum betrachteten Zeitpunkt und der anfänglichen kinetischen Energie umfasst.

9. Verfahren nach einem der vorhergehenden Ansprüche, wobei für die Zwecke des Ermittelns der Referenztrajektorie eine oder mehrere Verzögerungsstellgrößen, die in den Verzögerungsmodi wirksam sind, während einer jeweiligen Verzögerungsphase, in welcher ein jeweiliger Verzögerungsmodus aktiv ist, als zeitlich konstant angenommen werden.

10. Verfahren nach einem der vorhergehenden Ansprüche,
wobei die Referenztrajektorie eine Segelphase, in welcher das Fahrzeug (1) im Segelbetrieb fährt, und wenigstens eine der Segelphase zeitlich nachgelagerte weitere Verzögerungsphase, in welcher das Fahrzeug (1) im Schlepp- oder Rekuperationsbetrieb fährt oder aktiv gebremst wird, aufweist.

11. Verfahren nach einem der vorhergehenden Ansprüche, wobei das Verfahren ferner umfasst:

- Ermitteln einer Solltrajektorie für das Fahrzeug (1) in Abhängigkeit von der Referenztrajektorie;
- Erzeugen einer Stellvorgabe für die Längsführung des Fahrzeugs (1) in Abhängigkeit von der Solltrajektorie.

12. Datenverarbeitungsvorrichtung, wobei die Datenverarbeitungsvorrichtung eingerichtet ist, ein Verfahren nach einem der vorhergehenden Ansprüche auszuführen.

13. Software, umfassend Befehle, die bei der Ausführung der Software durch eine Datenverarbeitungsvorrichtung diese veranlassen, ein Verfahren nach einem der Ansprüche 1 bis 11 auszuführen.

**14.** Computerlesbares Speichermedium, auf dem eine Software nach Anspruch 13 gespeichert ist.

**Claims**

**1.** Method for determining a deceleration strategy for a vehicle (1),

wherein the method comprises:

- determining a target position located in an upcoming route section together with a target speed that the vehicle (1) should have when it reaches the target position, wherein the target speed is lower than a current speed of the vehicle (1); and
- ascertaining a reference trajectory for the vehicle (1) that makes it possible to reach the target position at the target speed,

wherein the reference trajectory is ascertained on the basis of analytical functions for at least two deceleration modes from the list comprising

- a coasting mode,
- a drag mode,
- a recuperation mode, and
- active braking,

**characterized in that** the analytical functions for each of the at least two deceleration modes indicate a speed and/or a travelled distance as a function of a time variable, and
**in that** ascertaining the reference trajectory comprises ascertaining one or more changeover times between the at least two deceleration modes on the basis of the analytical functions.

**2.** Method according to Claim 1, wherein the analytical functions are able to be indicated as closed mathematical expressions containing the time variable and multiple function parameters that characterize one or more kinds of driving resistances.

**3.** Method according to Claim 2, wherein the function parameters furthermore comprise one or more deceleration control variables for one or more of the deceleration modes.

**4.** Method according to one of the preceding claims, wherein one or more of the analytical functions indicating the travelled distance as a function of the time variable for the at least two deceleration modes may be indicated in the following form:

$$s(t) = A \ln (\tan(B\, t + C)^2 + 1) + D,$$

where s is the travelled distance, t is the time variable and A, B, C, D are constant function parameters.

**5.** Method according to one of the preceding claims, wherein one or more of the analytical functions indicating the speed as a function of the time variable for the at least two deceleration modes may be indicated in the following form:

$$v(t) = E \tan(F\, t + G),$$

where v is the speed, t is the time variable and E, F, G are constant function parameters.

**6.** Method according to one of the preceding claims, wherein the one or more changeover times is or are ascertained on the basis of minimizing a cost function,

wherein the cost function comprises a sum of multiple time integrals,
wherein each of the integrals extends, in terms of time, over a respective deceleration phase that is associated with a respective one of the at least two deceleration modes,

wherein the one or more changeover times forms or form upper or lower integral bounds of the integrals, and wherein the cost function exhibits under the integrals for the at least two deceleration phases in each case a time-dependent cost term that applies costs to a loss of kinetic energy that has taken place up to the time under consideration compared to an initial kinetic energy that the vehicle (1) has at the start of the deceleration.

7. Method for determining a deceleration strategy for a vehicle (1),

wherein the method comprises:

- determining a target position located in an upcoming route section together with a target speed that the vehicle (1) should have when it reaches the target position, wherein the target speed is lower than a current speed of the vehicle (1); and
- ascertaining a reference trajectory for the vehicle (1) that makes it possible to reach the target position at the target speed,

wherein the reference trajectory has at least two deceleration phases in which the vehicle (1) is operated in each case in a different deceleration mode from the list comprising

• a coasting mode,
• a drag mode,
• a recuperation mode, and
• active braking,

**characterized in that** ascertaining the reference trajectory comprises ascertaining one or more changeover times between the at least two deceleration modes, wherein the one or more changeover times is or are ascertained on the basis of minimizing a cost function, **in that** the cost function comprises a sum of multiple time integrals, wherein each of the integrals extends, in terms of time, over a respective one of the deceleration phases, **in that** the one or more changeover times forms or form upper or lower integral bounds of the integrals, and **in that** the cost function exhibits under the integrals for the at least two deceleration phases in each case a time-dependent cost term that applies costs to a loss of kinetic energy that has taken place up to the time under consideration compared to an initial kinetic energy that the vehicle (1) has at the start of the deceleration.

8. Method according to Claim 6 or 7, wherein the time-dependent cost term comprises a square of a difference between a kinetic energy at the time under consideration and the initial kinetic energy.

9. Method according to one of the preceding claims, wherein, for the purposes of ascertaining the reference trajectory, one or more deceleration control variables that are effective in the deceleration modes are assumed to be temporally constant during a respective deceleration phase in which a respective deceleration mode is active.

10. Method according to one of the preceding claims, wherein the reference trajectory includes a coasting phase, in which the vehicle (1) is driven in coasting mode, and at least one further deceleration phase that takes place at a time after the coasting phase, in which the vehicle (1) is driven in drag or recuperation mode or is actively braked.

11. Method according to one of the preceding claims, wherein the method furthermore comprises:

- ascertaining a target trajectory for the vehicle (1) on the basis of the reference trajectory;
- generating an actuation specification for the longitudinal guidance of the vehicle (1) on the basis of the target trajectory.

12. Data processing device, wherein the data processing device is configured to carry out a method according to one of the preceding claims.

13. Software comprising instructions that, when the software is executed by a data processing device, cause said data processing device to carry out a method according to one of Claims 1 to 11.

14. Computer-readable storage medium on which software according to Claim 13 is stored.

**Revendications**

1. Procédé de détermination d'une stratégie de décélération pour un véhicule (1),

   le procédé comprenant :

   - détermination d'une position cible située dans une portion de trajet qui se trouve devant, y compris une vitesse cible que le véhicule (1) doit avoir lorsqu'il atteint la position cible, la vitesse cible étant inférieure à une vitesse actuelle du véhicule (1) ; et
   - identification d'une trajectoire de référence pour le véhicule (1), qui prévoit d'atteindre la position cible à la vitesse cible,

   la trajectoire de référence étant identifiée sur la base de fonctions analytiques pour au moins deux modes de décélération choisis dans la liste comprenant

   • un régime de roue libre,
   • un régime de frein moteur,
   • un régime de récupération, et
   • un freinage actif,

   **caractérisé en ce que** lesdites fonctions analytiques indiquent, pour chacun desdits au moins deux modes de décélération, une vitesse et/ou un trajet parcouru en fonction d'une variable de temps, et
   **en ce que** l'identification de la trajectoire de référence comprend une identification d'un ou plusieurs instants de permutation entre les au moins deux modes de décélération sur la base des fonctions analytiques.

2. Procédé selon la revendication 1, les fonctions analytiques pouvant être indiquées sous la forme d'expressions mathématiques fermées avec la variable de temps et plusieurs paramètres de fonction, lesquels caractérisent un ou plusieurs types de résistance à la marche.

3. Procédé selon la revendication 2, les paramètres de fonction comprenant en outre une ou plusieurs grandeurs de commande de décélération pour un ou plusieurs des modes de décélération.

4. Procédé selon l'une des revendications précédentes, une ou plusieurs des fonctions analytiques, lesquelles indiquent le trajet parcouru en fonction de la variable de temps pour les au moins deux modes de décélération, pouvant être indiquées sous la forme suivante :

$$s(t) = A \ln (\tan(B\ t + C)^2 + 1) + D,$$

avec le trajet s, la variable de temps t et les paramètres de fonction constants A, B, C, D.

5. Procédé selon l'une des revendications précédentes, une ou plusieurs des fonctions analytiques, lesquelles indiquent la vitesse en fonction de la variable de temps pour les au moins deux modes de décélération, pouvant être indiquées sous la forme suivante :

$$v(t) = E \tan(F\ t + G),$$

avec la vitesse v, la variable de temps t et les paramètres de fonction constants E, F, G.

6. Procédé selon l'une des revendications précédentes, l'identification du ou des instants de permutation s'effectuant sur la base d'une minimisation d'une fonction de coût,

   la fonction de coût comprenant une somme de plusieurs intégrales temporelles,
   chacune des intégrales s'étendant dans le temps sur une phase de décélération respective, qui est associée à l'un respectif des au moins deux modes de décélération,
   le ou les instants de permutation formant des limites d'intégrale haute ou basse des intégrales, et
   la fonction de coût présentant sous les intégrales pour les au moins deux phases de décélération respectivement un terme de coût dépendant du temps, lequel applique un coût à une perte d'énergie cinétique qui se produit jusqu'à l'instant considéré par rapport à une énergie cinétique initiale que le véhicule (1) a au début de la décélération.

7. Procédé de détermination d'une stratégie de décélération pour un véhicule (1),

le procédé comprenant :

- détermination d'une position cible située dans une portion de trajet qui se trouve devant, y compris une vitesse cible que le véhicule (1) doit avoir lorsqu'il atteint la position cible, la vitesse cible étant inférieure à une vitesse actuelle du véhicule (1) ; et
- identification d'une trajectoire de référence pour le véhicule (1), qui prévoit d'atteindre la position cible à la vitesse cible,

la trajectoire de référence présentant au moins deux phases de décélération, dans lesquelles le véhicule (1) fonctionne respectivement dans un mode de décélération différent parmi la liste comprenant

- un régime de roue libre,
- un régime de frein moteur,
- un régime de récupération, et
- un freinage actif,

**caractérisé en ce que** l'identification de la trajectoire de référence comprend une identification d'un ou plusieurs instants de permutation entre les au moins deux modes de décélération, l'identification du ou des instants de permutation s'effectuant sur la base d'une minimisation d'une fonction de coût,
que la fonction de coût comprend une somme de plusieurs intégrales temporelles,
chacune des intégrales s'étendant dans le temps sur l'une respective des phases de décélération,
que le ou les instants de permutation forment des limites d'intégrale haute ou basse des intégrales, et
que la fonction de coût présente sous les intégrales pour les au moins deux phases de décélération respectivement un terme de coût dépendant du temps, lequel applique un coût à une perte d'énergie cinétique qui se produit jusqu'à l'instant considéré par rapport à une énergie cinétique initiale que le véhicule (1) a au début de la décélération.

8. Procédé selon la revendication 6 ou 7,
le terme de coût dépendant du temps comprenant un carré d'une différence entre une énergie cinétique à l'instant considéré et l'énergie cinétique initiale.

9. Procédé selon l'une des revendications précédentes, aux fins de l'identification de la trajectoire de référence, une ou plusieurs grandeurs de commande de décélération, qui sont effectives dans les modes de décélération, étant supposées constantes dans le temps pendant une phase de décélération respective, dans laquelle un mode de décélération respectif est actif.

10. Procédé selon l'une des revendications précédentes, la trajectoire de référence présentant une phase de roue libre, dans laquelle le véhicule (1) se déplace en régime de roue libre, et au moins une phase de décélération supplémentaire, qui suit dans le temps de la phase de roue libre et dans laquelle le véhicule (1) se déplace en régime de frein moteur ou de récupération ou est freiné activement.

11. Procédé selon l'une des revendications précédentes, le procédé comprenant en outre :

- identification d'une trajectoire de consigne pour le véhicule (1) en fonction de la trajectoire de référence ;
- génération d'une spécification de commande pour le guidage longitudinal du véhicule (1) en fonction de la trajectoire de consigne.

12. Dispositif de traitement de données, le dispositif de traitement de données étant conçu pour mettre en œuvre un procédé selon l'une des revendications précédentes.

13. Logiciel comprenant des instructions qui, lorsque le logiciel est exécuté par un dispositif de traitement de données, amènent celui-ci à mettre en œuvre un procédé selon l'une des revendications 1 à 11.

**14.** Support de stockage lisible par ordinateur, sur lequel est enregistré un logiciel selon la revendication 13.

Fig. 1

Bestimmen einer in einem vorausliegenden Streckenabschnitt liegenden Zielposition mitsamt einer Zielgeschwindigkeit, die das Fahrzeug bei Erreichen der Zielposition haben soll, wobei die Zielgeschwindigkeit geringer als eine aktuelle Geschwindigkeit des Fahrzeugs ist

Ermitteln einer Referenztrajektorie für das Fahrzeug, die ein Erreichen der Zielposition mit der Zielgeschwindigkeit vorsieht, wobei die Referenztrajektorie auf der Grundlage von analytischen Funktionen für wenigstens zwei Verzögerungsmodi aus der Liste umfassend einen Schleppbetrieb, einen Rekuperationsbetrieb und ein aktives Bremsen ermittelt wird, wobei die analytischen Funktionen für jeden der wenigstens zwei Verzögerungsmodi eine Geschwindigkeit und/oder einen zurückgelegten Fahrweg in Abhängigkeit von einer Zeitvariablen angeben, und wobei das Ermitteln der Referenztrajektorie ein Ermitteln eines oder mehrerer Umschaltzeitpunkte zwischen den wenigstens zwei Verzögerungsmodi umfasst.

# Fig. 2

Bestimmen einer in einem vorausliegenden Streckenabschnitt liegenden Zielposition mitsamt einer Zielgeschwindigkeit, die das Fahrzeug bei Erreichen der Zielposition haben soll,
wobei die Zielgeschwindigkeit geringer als eine aktuelle Geschwindigkeit des Fahrzeugs ist

Ermitteln einer Referenztrajektorie für das Fahrzeug, die ein Erreichen der Zielposition mit der Zielgeschwindigkeit vorsieht,
wobei die Referenztrajektorie wenigstens zwei Verzögerungsphasen aufweist, in denen das Fahrzeug jeweils in einem unterschiedlichen Verzögerungsmodus aus der Liste umfassend einen Segelbetrieb, einen Schleppbetrieb, einen Rekuperationsbetrieb und ein aktives Bremsen betrieben wird,
wobei das Ermitteln der Referenztrajektorie ein Ermitteln eines oder mehrerer Umschaltzeitpunkte zwischen den wenigstens zwei Verzögerungsmodi umfasst,
wobei das Ermitteln des oder der Umschaltzeitpunkte auf der Grundlage einer Minimierung einer Kostenfunktion erfolgt,
wobei die Kostenfunktion eine Summe aus mehreren zeitlichen Integralen umfasst,
wobei jedes der Integrale sich zeitlich über eine jeweilige der Verzögerungsphasen erstreckt,
wobei der oder die Umschaltzeitpunkte obere oder untere Integralgrenzen der Integrale bilden, und
wobei die Kostenfunktion unter den Integralen für die wenigstens zwei Verzögerungsphasen jeweils einen zeitabhängigen Kostenterm aufweist, der einen bis zum betrachteten Zeitpunkt erfolgten Verlust von kinetischer Energie im Vergleich zu einer anfänglichen kinetischen Energie, die das Fahrzeug zu Beginn der Verzögerung hat, mit Kosten beaufschlagt.

# Fig. 3

EP 4 377 176 B1

$$\dot{\boldsymbol{x}}_{\text{sail}} = \boldsymbol{f}_{\text{sail}}(\boldsymbol{x})$$
$$\boldsymbol{x}(t_0) = \boldsymbol{x}_0$$
$$t \in [t_0, t_{s_1})$$

$$\boldsymbol{x}_{\text{sail}}(t_{s_1}) = \boldsymbol{x}_{\text{drag}}(t_{s_1})$$

$$\dot{\boldsymbol{x}}_{\text{drag}} = \boldsymbol{f}_{\text{drag}}(\boldsymbol{x})$$
$$t \in [t_{s_1}, t_{s_2})$$

$$\boldsymbol{x}_{\text{drag}}(t_{s_2}) = \boldsymbol{x}_{\text{brake}}(t_{s_2})$$

$$\dot{\boldsymbol{x}}_{\text{brake}} = \boldsymbol{f}_{\text{brake}}(\boldsymbol{x}, u)$$
$$\boldsymbol{x}(t_f) = \boldsymbol{x}_f$$
$$t \in [t_{s_2}, t_f]$$

Segelbetrieb

Schleppbetrieb

Aktives Bremsen

Fig. 4

(a) Zeitdomäne.

(b) Wegdomäne.

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014215673 A1
- DE 102015205371 A1
- DE 102017205134 A1
- EP 2591968 A2
- DE 102018131280 A1

**In der Beschreibung aufgeführte Nicht-Patentliteratur**

- Vorausschauende Längsregelung schwerer Lastkraftwagen. **TERWEN, STEPHAN.** PhD. Karlsruher Institut für Technologie, 2010
- Energieoptimale Längsführung von Kraftfahrzeugen durch Einsatz vorausschauender Fahrstrategien. **RADKE, TOBIAS.** PhD. Karlsruher Institut für Technologie, 2013
- **YAN et al.** Eco-Coasting Strategies Using Road Grade Preview: Evaluation and Online Implementation Based on Mixed Integer Model Predictive Control. *arXiv,* 2015
- Optimal Ecodriving Control: Energy-Efficient Driving of Road Vehicles as an Optimal Control Problem. **A SCIARRETTA ; GIOVANNI DE NUNZIO ; L LEON OJEDA.** IEEE Control Systems Magazine. Institute of Electrical and Electronics Engineers, 2015
- Optimal Control Based Eco-Driving. **SAERENS, BART.** PhD. Katholieke Universiteit Leuven, 2012
- **XUPING, XU ; ANTSAKLIS, P.J.** Optimal Control of Switched Systems based on Parameterization of the Switching Instants. *IEEE Transactions on Automatic Control,* 2004
- **PAKNIYAT, ALI ; CAINES, PETER E.** On the Hybrid Minimum Principle. *IEEE Transactions on Automatic Control.,* 2020